# EUROPEAN PATENT APPLICATION

(11) **EP 2 703 977 A2**
(43) Date of publication of application: **05.03.2014**
(21) Application number: 13177815.1
(22) Date of filing: 24.07.2013
(51) Int. Cl.: G06F 3/0488

(54) **Method and apparatus for controlling image display in an electronic device**

(30) Priority: 29.08.2012 KR 20120095282; 03.09.2012 KR 20120097399; 04.09.2012 KR 20120097759; 06.09.2012 US 201261697490 P; 21.01.2013 KR 20130006519
(71) Applicant: Samsung Electronics Co., Ltd, Gyeonggi-do 443-742 (KR)
(72) Inventor: Seo, J, Gyeonggi-do (KR); Lee, Ho-Shin, Gyeonggi-do (KR); Son, Kwang-Sub, Gyeonggi-do (KR); Yoon, Su-Ha, Seoul (KR)
(74) Representative: Gover, Richard Paul

(57) **Abstract**

A method and an apparatus for magnifying or reducing a displayed image in an electronic device. A first method comprises detecting at least one first touch point, and determining a first region according to the at least one first touch point. If the area of the first region is maintained, the first method further comprises determining whether the first touch point resides in a display control region. If the first touch point resides in the display control region, the first method further comprises magnifying or reducing a displayed image by according to a location change of the first touch point.

## Description

### BACKGROUND OF THE INVENTION

### 1. Field of the Invention:

The present invention relates to a method and an apparatus for controlling image display in an electronic device. More particularly, the present invention relates to a method and an apparatus for magnifying or reducing an image displayed in an electronic device.

### 2. Description of the Related Art:

As multimedia services using portable electronic devices are increasingly used, the amount of information to be processed and displayed by the portable electronic device rises. Portable electronic devices including touch screens for increasing a display size by enhancing space usage are drawing more attention.

A touch screen is a single input/output device for inputting and displaying information. Accordingly, when a portable electronic device incorporates a touch screen, the portable electronic device can increase its display area by removing separate input devices such as a keypad.

As the services to be processed by the portable electronic device increase to satisfy the user's various needs, a user interface for allowing a user to easily access various services is an increasingly important design consideration. Further, because portable electronic devices have a limited display area, a user interface allowing the user to easily access the various services is desirable. For example, while portable electronic devices provide various content to satisfy the user's various needs, content may be displayed at a small size or only a portion of the content may be displayed because of the limited display area. Hence, the portable electronic device requires a user interface for controlling to zoom in and zoom out (e.g., so as to magnify and reduce) content, a document, an image, or the like displayed in a display. When reference is made in the present specification to "image display" this refers to the display of any information, including but not limited to pictures and text.

As stated above, when a touch screen is used, an electronic device does not need to include a separate input device such as a keypad. Therefore a control method for such an electronic device differs from that for electronic devices including a separate input device. An electronic device including a touch screen requires an enhanced user interface for providing user convenience according to the touch screen.

Therefore, a need exists for an electronic device including a touch screen comprising an enhanced user interface for magnifying or reducing a displayed image using a touch screen. For example, a need exists for a method and an apparatus for magnifying or reducing a screen in an electronic device. When reference is made in the present specification to reducing an image, this refers to reducing the size of the image (and optionally increasing the displayed proportion of an image which extends beyond the size of the display device). That is, "reducing" is the opposite of "magnifying" when referring to a displayed image and may be alternatively referred to as reducing, minifying or shrinking.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to address at least one of the above-mentioned problems and/or disadvantages and to provide at least one of the advantages described below. Accordingly, an aim of certain embodiments of the present invention is to provide a method and an apparatus for magnifying or reducing a screen in an electronic device.

Another aim of certain embodiments of the present invention is to provide a method and an apparatus for magnifying or reducing a display by considering an area change of a reference region in an electronic device.

Another aim of certain embodiments of the present invention is to provide a method and an apparatus for magnifying or reducing a display by considering an area change rate of a reference region in an electronic device.

Another aim of certain embodiments of the present invention is to provide a method and an apparatus for magnifying or reducing a display by considering a change of a number of pixels in a reference region in an electronic device.

Another aim of certain embodiments of the present invention is to provide a method and an apparatus for magnifying or reducing a display by considering touch information of a zoom region in an electronic device.

Another aim of certain embodiments of the present invention is to provide a method and an apparatus for magnifying or reducing a display by considering drag information of a zoom region in an electronic device.

According to a first aspect of the present invention there is provided a method for controlling image display in an electronic device, the method comprising: detecting at least one first touch point; determining a first region according to the at least one first touch point; determining whether an area of the first region changes; when the area of the first region is maintained, determining whether the first touch point resides in a display control region; and when the first touch point resides in the display control region, magnifying or reducing a displayed image by according to a location change of the first touch point.

According to a second aspect of the present invention there is provided an electronic device comprising: a touch screen arranged to detect a touch; and a controller arranged to control the touch screen; wherein the controller is further arranged to implement the above method.

There is further disclosed a method for controlling image display in an electronic device, the method comprising: detecting a touch point in a first region; determining whether to magnify or reduce a displayed image according a drag direction of the touch point; and magnifying or reducing the displayed image in proportion to a drag length of the touch point; wherein the first region comprises at least one designated region in a display region.

There is further disclosed an electronic device comprising: a touch screen arranged to detect a touch point in a first region; and a controller arranged to control the touch screen, and further arranged to determine to magnify or reduce an image displayed on the touch screen according to a drag direction of the touch point, and to magnify or reduce the displayed image in proportion to a drag length of the touch point; wherein the first region comprises at least one designated region in a display region.

In accordance with an exemplary embodiment of the present invention, a method for controlling display in an electronic device is provided. The method includes detecting at least one first touch, determining a first region according to the at least one first touch, determining whether an area of the first region changes, when the area of the first region is maintained, determining whether the first touch point resides in a display control region, and when the first touch point resides in the display control region, magnifying or reducing a display by considering a location change of the first touch point.

In accordance with another exemplary embodiment of the present invention, the determining of whether the area of the first region changes includes when detecting at least one second touch while the first touch is maintained, determining a second region by considering the at least one first touch and the at least one second touch; and determining whether the area of the first region changes by comparing respective areas of the first region and the second region.

In accordance with another exemplary embodiment of the present invention, the determining of whether the area of the first region changes includes when detecting movement of at least one of the at least one first touch, determining a second region by considering the movement of the at least one first touch; and determining whether the area of the first region changes by comparing respective areas of the first region and the second region.

In accordance with another exemplary embodiment of the present invention, an electronic device is provided. The device includes a touch screen, and a controller for determining a first region according to at least one first touch detected through the touch screen, for determining whether an area of the first region changes, for determining whether the first touch point resides in a display control region when the area of the first region is maintained, and for magnifying or reducing a display of the touch screen by considering a location change of the first touch point when the first touch point resides in the display control region.

In accordance with another exemplary embodiment of the present invention, when detecting at least one second touch while the first touch is maintained, the controller determines a second region by considering the at least one first touch and the at least one second touch, and determines whether the area of the first region changes by comparing respective areas of the first region and the second region.

In accordance with another exemplary embodiment of the present invention, when detecting movement of at least one of the first touch, the controller determines a second region by considering the movement of the at least one of the at least one first touch, and determines whether the area of the first region changes by comparing respective areas of the first region and the second region.

In accordance with another exemplary embodiment of the present invention, a method for controlling display in an electronic device is provided. The method includes detecting a touch in a first region, determining to magnify or reduce the display by considering a drag direction of the touch, and magnifying or reducing the display in proportion to a drag length of the touch. The first region includes at least one designated region in a display region.

In accordance with another exemplary embodiment of the present invention, an electronic device is provided. The device includes a touch screen for detecting a touch, and a controller for determining to magnify or reduce a display of the touch screen by considering a drag direction of the touch, and for magnifying or reducing the display in proportion to a drag length of the touch. The first region includes at least one designated region in a display region.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a quadrangular reference region generated based on touch information according to an exemplary embodiment of the present invention;

FIG. 2 illustrates a quadrangular reference region generated based on a single touch according to an exemplary embodiment of the present invention;

FIG. 3 illustrates a quadrangular reference region generated based on multi-touch according to an exemplary embodiment of the present invention;

FIGS. 4A and 4B illustrate a quadrangular reference region generated by applying an offset according to an exemplary embodiment of the present invention;

FIGS. 5A and 5B illustrate a quadrangular reference region generated by applying an offset according to an exemplary embodiment of the present invention;

FIG. 6 illustrates touch coordinate collection to generate a reference region according to an exemplary embodiment of the present invention;

FIG. 7 illustrates scrolling based on an area change of a reference region generated by a single touch according to an exemplary embodiment of the present invention;

FIGS. 8A and 8B illustrate scrolling-down based on an area change of a reference region according to an exemplary embodiment of the present invention;

FIGS. 9A and 9B illustrate scrolling-up based on an area change of a reference region according to an exemplary embodiment of the present invention;

FIGS. 10A and 10B illustrate display magnification based on an area change of a reference region according to an exemplary embodiment of the present invention;

FIGS. 11A and 11B illustrate display reduction based on an area change of a reference region according to an exemplary embodiment of the present invention;

FIG. 12 illustrates a scrolling by a multi-touch according to an exemplary embodiment of the present invention;

FIG. 13 illustrates a scrolling by a multi-touch according to an exemplary embodiment of the present invention;

FIGS. 14A and 14B illustrate a circular reference region generated based on a single touch according to an exemplary embodiment of the present invention;

FIGS. 15A and 15B illustrate a circular reference region generated based on a multi-touch according to an exemplary embodiment of the present invention;

FIGS. 16A and 16B illustrate an object direction change based on a location change of a multi-touch according to an exemplary embodiment of the present invention;

FIGS. 17A and 17B illustrate display magnification by considering an area change of a circular reference region according to an exemplary embodiment of the present invention;

FIGS. 18A and 18B illustrate display reduction by considering an area change of a circular reference region according to an exemplary embodiment of the present invention;

FIG. 19 illustrates an electronic device according to an exemplary embodiment of the present invention;

FIG. 20A illustrates a method for magnifying/reducing a display based on an area change of a reference region in an electronic device according to an exemplary embodiment of the present invention;

FIG. 20B illustrates an electronic device for magnifying/reducing a display according to an exemplary embodiment of the present invention;

FIG. 21 illustrates a method for magnifying/reducing a display based on an area change of a reference region in an electronic device according to an exemplary embodiment of the present invention;

FIG. 22 illustrates a method for magnifying or reducing a display based on a gesture of a zoom region in an electronic device according to an exemplary embodiment of the present invention;

FIG. 23 illustrates a method for magnifying or reducing a display based on tap information of a zoom region in an electronic device according to an exemplary embodiment of the present invention;

FIGS. 24A and 24B illustrate a display for a zoom region according to an exemplary embodiment of the present invention;

FIGS. 25A and 25B illustrate a display for a zoom region according to an exemplary embodiment of the present invention;

FIG. 26 illustrates a method for selectively magnifying/reducing a display based on an area change of a reference region according to an exemplary embodiment of the present invention;

FIG. 27 illustrates a method for selectively magnifying/reducing a display based on an area change of a reference region according to an exemplary embodiment of the present invention;

FIG. 28 illustrates a method for selectively magnifying/reducing a display based on an area change of a reference region according to an exemplary embodiment of the present invention;

FIGS. 29A to 29C illustrate a display for determining an area change of a reference region according to an exemplary embodiment of the present invention;

FIGS. 30A and 30B illustrate a display for magnifying a display according to drag information of a zoom region according to an exemplary embodiment of the present invention;

FIGS. 31A and 31B illustrate a display for reducing a display according to drag information of a zoom region according to an exemplary embodiment of the present invention; and

FIGS. 32A to 32D illustrate a display for magnifying or reducing a display by considering an inflection point of a drag in a zoom region according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Exemplary embodiments of the present invention provide a technique for magnifying or reducing a displayed image (displayed content) in an electronic device.

The electronic device may encompass various electronic devices including a touch screen. For example, the electronic devices include a mobile communication terminal including a touch screen, a Personal Digital Assistant (PDA), a laptop computer, a desktop computer, a smart phone, a netbook, a television, a Mobile Internet Device (MID), an Ultra Mobile Personal Computer (UMPC), a tablet Personal Computer (PC), a navigation system, an MP3 player, a washing machine, a drying machine, a Global Positioning System (GPS) device, a portable gaming device, a hand-held e-book, a sound system, a set-top box, a home control device, a digital camera, a watch, and the like.

Hereafter, a touch corresponds to a touch input to a touch screen which is detected and maintained, and a touch release corresponds to the touch input to the touch screen being terminated (e.g., when the touch is no longer maintained in a touching position relative to the touch screen).

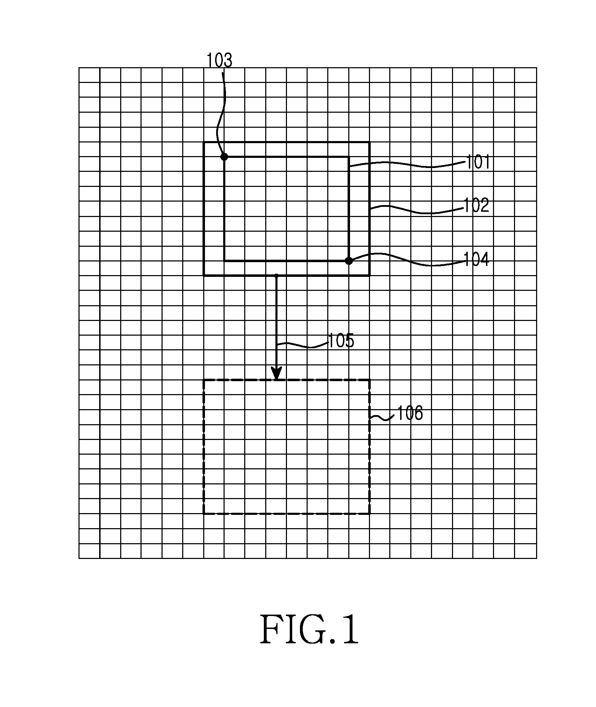

FIG. 1 depicts a quadrangular reference region generated based on touch information according to an exemplary embodiment of the present invention.

Referring to FIG. 1, the electronic device can detect at least one touch through a content region displayed by a display. The content region is that portion of the display that can display content. When detecting two touches in the content region (for instance, consecutive touches), the electronic device can generate a quadrangular reference region 101 or 102 based on two pieces of touch information (that is, two touch points). The reference regions 101 and 102 generated based on the touch information are represented to show the corresponding shapes illustrated in FIG. 1. However, the shapes corresponding to reference regions 101 and 102 may not actually be displayed on the touch screen. Alternatively, the electronic device may display the reference region 101 and 102 for user convenience. The reference region corresponds to a base region for magnifying or reducing a display by considering an area change.

The reference region 101 or 102 based on the touch information can be defined by considering coordinates or an intersection point of at least one touch point detected in a content region displayed in the touch screen. For example, the electronic device can form the quadrangular reference region by taking into account maximum/minimum x coordinates and maximum/minimum y coordinates among coordinates of touch points detected in the content region. The coordinates of the touch point may be determined based on a touch panel or a screen resolution for a touch screen.

For example, when detecting two touches in the content region displayed on the touch screen, the electronic device can detect a first intersection point 103 and a second intersection point 104 which are closest to the respective touch points, from intersection points of pixels. An intersection point is considering to be a corner point between adjacent pixels, for instance in the middle of a rectangular arrangement of four adjacent pixels. More specifically, the electronic device can detect a first intersection point 103 and a second intersection point 104 which are the intersection points of the pixels closest to the respective touch points. Next, the electronic device can generate either a reference region 101 or a reference region 102 to cover at least one pixel (assuming the first intersection points 103 and 104 are not coincident and are not vertically or horizontally aligned in the case of reference region 101) by considering a diagonal joining the first intersection point 103 and the second intersection point 104. For example, the electronic device can generate the quadrangular reference region 101 having a diagonal joining the first intersection point 103 and the second intersection point 104. In this case, the reference region 101 includes 42 pixels (e.g., 6 pixels × 7 pixels) in total. The reference region 101 exactly extends to reach the first and second intersection points 104, 104. Alternatively, the electronic device may generate the quadrangular reference region 102 which has a line segment joining the first intersection point 103 and the second intersection point 104 as the diagonal and covers pixels including the first intersection point 103 and the second intersection point 104 such that the reference region 102 covers one pixel surrounding the intersection points 103, 104). In this case, the reference region 102 includes 72 pixels (e.g., 8 pixels × 9 pixels) in total.

When a second reference region 106 is set according to a touch movement 105 (e.g., a drag) used to modify the first reference region 101 or 102, the electronic device can determine a corresponding function by considering the area change of the second reference region 106 with respect to the first reference region 101 or 102. For example, when the first reference region 101 includes 42 pixels, the electronic device can magnify the content region because the number of the pixels in the second reference region 106 increases. Alternatively, because the area of the first reference region 101 is greater than the area of the second reference region 106, the electronic device can magnify the content region. In so doing, when an area difference (e.g., the difference in the number of pixels) between the first reference region 101 and the second reference region 106 is smaller than a threshold, the electronic device may recognize a scrolling function according to the touch point change 105. For example, when the first reference region 101 and the second reference region 106 have the same area (or a change in area smaller than the threshold), the electronic device can recognize scrolling according to the touch point change 105.

The area or the number of the pixels of the reference region 101, 102, and 106 can be determined based on at least one of the size and the resolution of the display region.

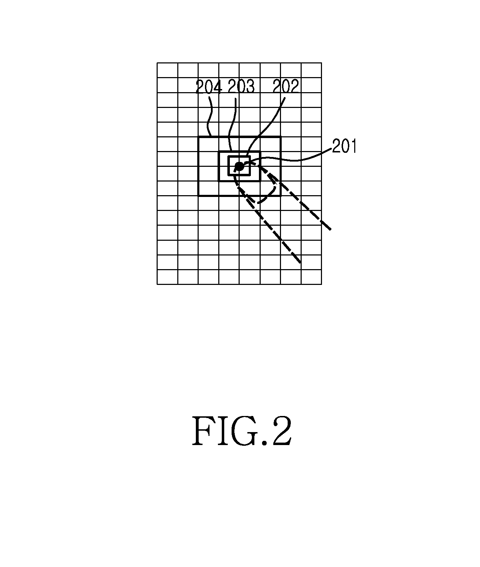

FIG. 2 depicts a quadrangular reference region generated based on a single touch according to an exemplary embodiment of the present invention.

Referring to FIG. 2, it is assumed that the single touch is detected in the content region displayed on the touch screen and that the reference region is generated based on the resolution of the touch screen. In so doing, the electronic device can detect at least one touch of a user or an object in the content region displayed on the touch screen.

When detecting the touch as shown in FIG. 2, the electronic device can detect an intersection point 201 closest to the touch point among intersection points of the pixels. For example, when detecting the touch on any one pixel, the electronic device can detect the intersection point 201 closest to the touch point among the intersection points of the pixels of the detected touch.

Next, the electronic device can generate a reference region 202, 203 and 204 to cover at least one pixel based on the intersection point 201 (a corner) of the detected pixel. For example, the electronic device can generate the reference region 202 with the same area as one pixel but centre on the intersection point 201 of the detected pixel. For example, the electronic device can generate the reference region 202 to cover only one quarter of each of four pixels based on the intersection point 201 of the detected pixel. Alternatively, the electronic device may generate the reference region 203 to cover four pixels based on the intersection point 201 of the detected pixel. That is, the electronic device may generate the reference region 203 to cover the four pixels around the intersection point 201 of the detected pixel. Alternatively, electronic device may generate the reference region 204 to cover 16 pixels based on the intersection point 201 of the detected pixel. That is, the electronic device may generate the reference region 204 to cover the 16 pixels around the intersection point 201 of the detected pixel.

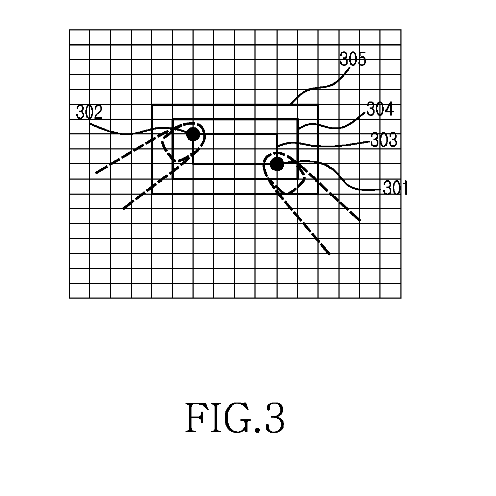

FIG. 3 depicts a quadrangular reference region generated based on multi-touch (two or more simultaneous touch inputs) according to an exemplary embodiment of the present invention.

Referring to FIG. 3, it is assumed that two touches are detected in the content region displayed on the touch screen and that the reference region is generated based on the resolution. In so doing, the electronic device can detect at least one touch of the user or the object in the content region displayed on the touch screen.

When detecting two touches as shown in FIG. 3, the electronic device can detect a first intersection point 301 closest to a first touch point and a second intersection point 302 closest to a second touch point among the intersection points of the pixels.

Next, the electronic device can generate reference regions 303, 304 and 305 to include at least one pixel by considering a diagonal joining the first intersection point 301 and the second intersection point 302. For example, the electronic device can generate the reference region 303 with the diagonal joining the first intersection point 301 and the second intersection point 302. In this case, the reference region 303 includes 8 pixels (e.g., 4 pixels × 2 pixels) in total. Alternatively, the electronic device may generate the reference region 304 which has a line segment joining the first intersection point 301 and the second intersection point 302 as the diagonal and covers the pixels including the first intersection point 301 and the second intersection point 302. In this case, the reference region 304 includes 24 pixels (e.g., 6 pixels × 4 pixels) in total. Alternatively, the electronic device may generate the reference region 305 having the diagonal which joins the first intersection point 301 and the second intersection point 302 and extends from the first intersection point 301 and the second intersection point 302 by two pixels. In this case, the reference region 305 includes 48 pixels (e.g., 8 pixels × 6 pixels) in total.

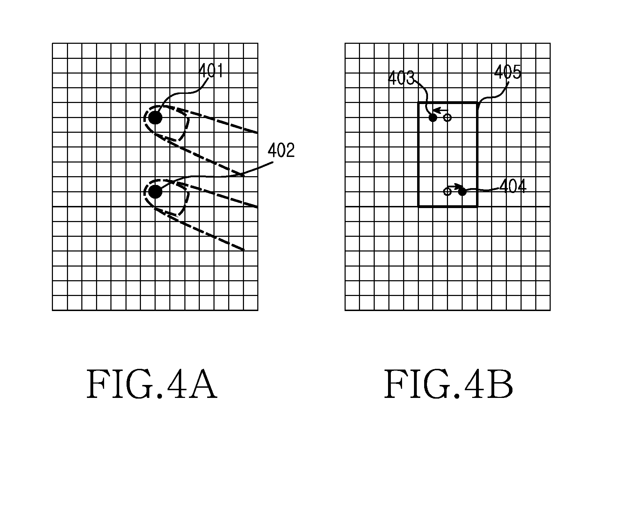

FIGS. 4A and 4B illustrate a quadrangular reference region generated by applying an offset according to an exemplary embodiment of the present invention.

Referring to FIGS. 4A and 4B, it is assumed that the electronic device detects two touches in the content region displayed on the touch screen and generates the reference region based on the resolution. In so doing, the electronic device can detect at least one touch of the user or the object in the content region displayed on the touch screen.

When detecting two touches as shown in FIG. 4A, the electronic device can detect a first intersection point 401 closest to a first touch point and a second intersection point 402 closest to a second touch point among the intersection points of the pixels.

Next, the electronic device can generate a reference region to cover at least one pixel by considering a diagonal joining the first intersection point 401 and a second intersection point 402. For example, when the first intersection point 401 and the second intersection point 402 have the same x coordinate value, the electronic device can generate the reference region 405 by applying the offset to the x coordinate values of the first intersection point 401 and / or the second intersection point 402. In more detail, in one embodiment the electronic device generates a first intersection point 403 corrected by subtracting a value α from the x coordinate value of the first intersection point 401, and generates a second intersection point 404 corrected by adding the value α to the x coordinate value of the second intersection point 402 as shown in FIG. 4B. Next, the electronic device can generate the reference region 405 based on the diagonal joining the first intersection point 403 corrected and the second intersection point 404 corrected.

According to exemplary embodiments of the present invention, when the x coordinate value of the first intersection point is the same as the x coordinate value of the second intersection point, the electronic device determines the reference region by applying the offset to the x coordinate values.

According to exemplary embodiments of the present invention, when the x coordinate value of the first intersection point is the same as the x coordinate value of the second intersection point, the electronic device may determine the area (the size) of the reference region by considering a change of the y coordinate values. For example, the electronic device can recognize the square of the difference between the y coordinate values of the first intersection point and the second intersection point, as the area of the reference region. For example, the electronic device can recognize the sum of the square of the x coordinate change value and the square of the y coordinate change value, as the area of the reference region.

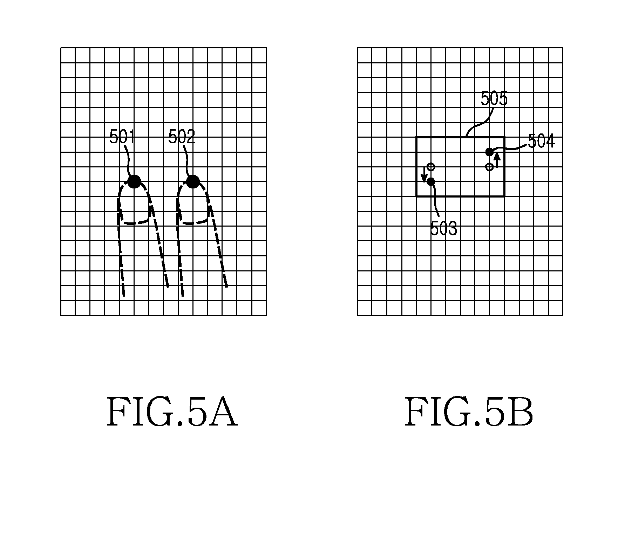

FIGS. 5A and 5B illustrate a quadrangular reference region generated by applying the offset according to an exemplary embodiment of the present invention.

Referring to FIGS. 5A and 5B, it is assumed that two touches are detected in the content region displayed on the touch screen and that the reference region is generated based on the resolution. In so doing, the electronic device can detect at least one touch of the user or the object in the content region displayed on the touch screen.

When detecting two touches as shown in FIG. 5A, the electronic device can detect a first intersection point 501 closest to a first touch point and a second intersection point 502 closest to a second touch point among the intersection points of the pixels.

Next, the electronic device can generate a reference region to cover at least one pixel by considering a diagonal joining the first intersection point 501 and a second intersection point 502. For example, when the first intersection point 501 and the second intersection point 502 have the same y coordinate value, the electronic device can generate the reference region 505 by applying an offset to the y coordinate values of the first intersection point 501 and / or the second intersection point 502. In more detail, in one embodiment the electronic device generates a first intersection point 503 corrected by subtracting a value β from the y coordinate value of the first intersection point 501, and generates a second intersection point 504 corrected by adding the value β to the y coordinate value of the second intersection point 502 as shown in FIG. 5B. Next, the electronic device can generate the reference region 505 based on the diagonal joining the first intersection point 503 corrected and the second intersection point 504 corrected.

According to exemplary embodiments of the present invention, when the y coordinate value of the first intersection point is the same as the y coordinate value of the second intersection point, the electronic device determines the reference region by applying the offset to the y coordinate values.

According to exemplary embodiments of the present invention, when the y coordinate value of the first intersection point is the same as the y coordinate value of the second intersection point, the electronic device may determine the area (e.g., the size) of the reference region by considering the change of the x coordinate values. For example, the electronic device can recognize the square of the difference between the x coordinate values of the first intersection point and the second intersection point, as the area of the reference region. For example, the electronic device can recognize the sum of the square of the x coordinate change value and the square of the y coordinate change value, as the area of the reference region.

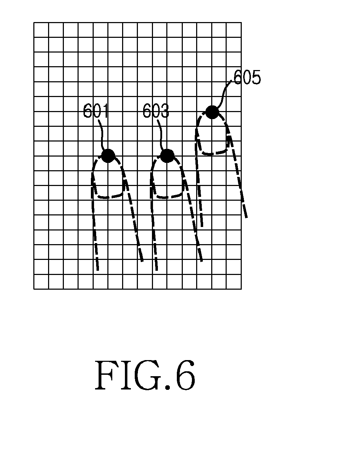

FIG. 6 illustrates a touch coordinate collection to generate a reference region according to an exemplary embodiment of the present invention.

Referring to FIG. 6, the electronic device can detect at least one touch of the user or the object through the content region displayed in the touch screen. When detecting multiple touches, the electronic device determines coordinates of each touch. In detail, when detecting a first touch in FIG. 6, the electronic device determines first touch coordinates (e.g., an x coordinate value and a y coordinate value) 601. When detecting a second touch, the electronic device determines second touch coordinates (e.g., an x coordinate value and a y coordinate value) 603. When detecting a third touch, the electronic device determines and stores third touch coordinates (e.g., an x coordinate value and a y coordinate value) 605. The electronic device may store at least one of the first touch coordinates 601, the second touch coordinates 603, and the third touch coordinates 605 in a memory. In so doing, the electronic device may generate and store a touch coordinate table. Next, the electronic device can generate a reference region by considering the touch coordinates stored in the memory.

When detecting a number of touches smaller than a reference number, the electronic device determines and stores coordinates up to the last touch in the memory. For example, when the reference number is 4 but a next touch after the third touch is not detected during a reference time, the electronic device can recognize that the third touch is the last touch.

For example, after detecting the touches up to the reference number, the electronic device may determine coordinates of each touch. In detail, when detecting three touches as shown in FIG. 6, the electronic device sets the number of touches to 3, determines the first touch coordinates (e.g., the x coordinate value and the y coordinate value) 601, and determines the second coordinates (e.g., the x coordinate value and the y coordinate value) 603. The electronic device determines the third touch coordinates (the x coordinate value and the y coordinate value) 605. The electronic device may store at least one of the first touch coordinates 601, the second touch coordinates 603, and the third touch coordinates 605 in a memory. In so doing, the electronic device may generate and store the touch coordinate table. Next, the electronic device can generate the reference region by considering the touch coordinates stored in the memory.

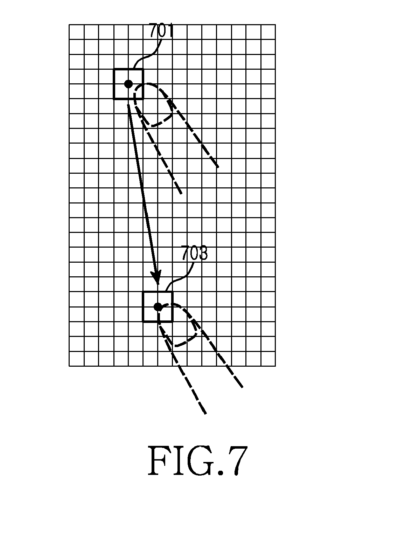

FIG. 7 illustrates scrolling based on a change of a reference region generated by a single touch according to an exemplary embodiment of the present invention.

Referring to FIG. 7, when detecting a first touch, the electronic device generates a first reference region 701 by considering first touch information. When the first touch moves, the electronic device generates a second reference region 703 according to the movement of the first touch.

In so doing, the electronic device can scroll through the screen according to the first touch movement by considering at least one of a position change, a pixel number change (a change in size of the reference area), and the area change rate of the first reference region 701 and the second reference region 703. For example, when the pixel number change of the first reference region 701 and the second reference region 703 does not exceed a threshold, the electronic device can scroll through the content displayed on the touch screen according to the movement of the first touch (a change in position of the reference area). More specifically, based on the assumption that the first reference region 701 includes 4 pixels, a first change is zero pixels, and a second change is 10 pixels, when the pixel number change of the first reference region 701 and the second reference region 703 is zero, the electronic device can scroll through the content displayed on the touch screen according to the movement of the touch point. For example, when determining that the pixel number change of the first reference region 701 and the second reference region 703 exceeds the first change and falls below the second change, the electronic device can scroll through the content displayed on the touch screen according to the movement of the touch point. The first change corresponds to a reduction threshold for determining whether to reduce the content region, and the second change corresponds to a magnification threshold for determining whether to magnify the content region.

For example, when the area change of the first reference region 701 and the second reference region 703 does not exceed the threshold, the electronic device can scroll through the content displayed on the touch screen according to the movement of the first touch. More specifically, on the assumption that the area of the first reference region 701 is 84 mm², the first change is 0 mm² and the second change is 20 mm², when the area change of the first reference region 701 and the second reference region 703 is 0 mm², the electronic device can scroll through the content displayed on the touch screen according to the movement of the touch point. For example, when determining that the area change of the first reference region 701 and the second reference region 703 exceeds the first change and falls below the second change, the electronic device can scroll through the content displayed on the touch screen according to the movement of the touch point. The first change corresponds to the reduction threshold for determining whether to reduce the content region, and the second change corresponds to the magnification threshold for determining whether to magnify the content region.

For example, when the area change of the first reference region 701 and the second reference region 703 does not exceed the threshold, the electronic device may scroll through the content displayed on the touch screen according to the movement of the first touch.

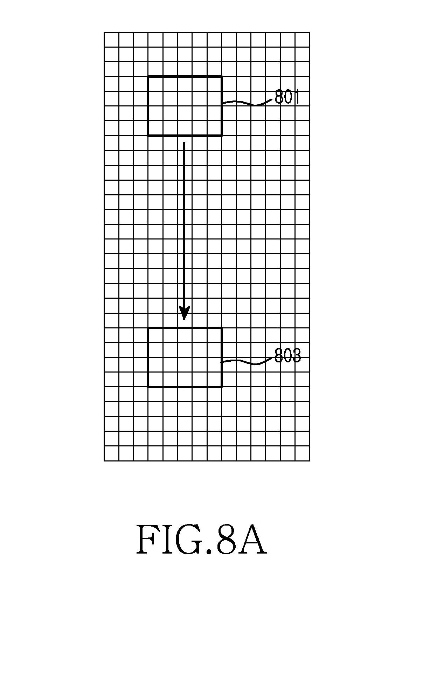

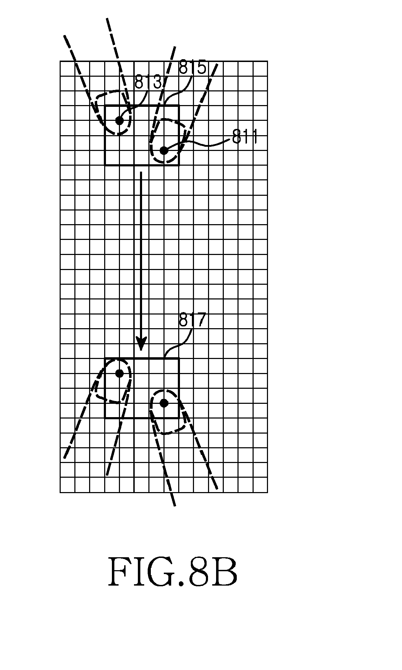

FIGS. 8A and 8B illustrate scrolling-down based on a change of a reference region according to an exemplary embodiment of the present invention.

Referring to FIG. 8A, the electronic device generates a first reference region 801 by considering at least one touch information detected in the content region displayed on the touch screen. For example, the electronic device generates the first reference region 801 by considering a maximum value and a minimum value of x coordinate values and a maximum value and a minimum value of y coordinate values of the touch points. For example, the electronic device may generate the first reference region 801 by considering a line segment joining intersection points closest to the touch points. When detecting the single touch, the electronic device may generate the quadrangular reference region 801 of a minimum unit based on the coordinates of the touch point. Herein, the minimum unit may be set to a value greater than zero.

When detecting the movement of at least one touch, the electronic device generates a second reference region 803 by considering the changed touch information.

Next, when the change of the first reference region 801 and the second reference region 803 falls below the threshold, the electronic device can scroll down through the content region according to the movement of the touch point. In so doing, the change can be represented by at least one of an area change, a pixel number change, and an area change rate of the first reference region 801 and the second reference region 803. For example, when the area change of the first reference region 801 and the second reference region 803 falls below the threshold, the electronic device can scroll down through the content region according to the movement of the touch point. Herein, the threshold is predefined according to a function setup of the electronic device, and may be changeable based on the user's setting. For example, the user may configure the threshold according to the user's preferences. The content region can include an object displayed in the touch screen of the electronic device. The object can include a graphical object.

As such, when the area change of the first reference region 801 and the second reference region 803 falls below the threshold, the electronic device can scroll down through the content region according to the movement of the touch point. More specifically, when detecting two touches, the electronic device can scroll down through the content region displayed in the touch screen as shown in FIG. 8B. Herein, the area change can be represented by at least one of the area change, the pixel number change, and the area change rate of the first reference region 801 and the second reference region 803.

Referring to FIG. 8B, when detecting two touches, the electronic device detects a first intersection point 811 closest to the first touch point and a second intersection point 813 closest to the second touch point. Next, the electronic device generates a first reference region 815 by considering the first intersection point 811 and the second intersection point 813. For example, the electronic device generates the first reference region 815 by considering a maximum value and a minimum value of x coordinate values and a maximum value and a minimum value of y coordinate values of the intersection points 811 and 813. For example, the electronic device may generate the first reference region 815 by considering a line segment joining the first intersection point 811 and the second intersection point 813.

When detecting the movement of at least one of the first touch and the second touch, the electronic device generates a second reference region 817 by considering the changed touch information.

Next, when the area change of the first reference region 815 and the second reference region 817 falls below the threshold, the electronic device can scroll down through the content region according to the movement of the touch point. In so doing, the area change can be represented by at least one of the area change, the pixel number change, and the area change rate of the first reference region 815 and the second reference region 817. For example, when the pixel number change of the first reference region 815 and the second reference region 817 does not exceed the threshold, the electronic device can scroll down through the content displayed on the touch screen according to the movement of the touch. More specifically, on the assumption that the first reference region 815 includes 20 pixels, the first change threshold is zero pixels, and the second change threshold is 20 pixels, when the pixel number change of the first reference region 815 and the second reference region 817 is zero, the electronic device can scroll down through the content displayed on the touch screen according to the movement of the touch point. For example, when determining that the pixel number change of the first reference region 815 and the second reference region 817 exceeds the first change threshold and falls below the second change threshold, the electronic device can scroll down through the content displayed on the touch screen according to the movement of the touch point. The first change corresponds to the reduction threshold for determining whether to reduce the content region, and the second change corresponds to the magnification threshold for determining whether to magnify the content region.

For example, when the area change of the first reference region 815 and the second reference region 817 does not exceed the threshold, the electronic device can scroll down through the content displayed on the touch screen according to the movement of the touch point. More specifically, on the assumption that the area of the first reference region 815 is 84 mm², the first change is 0 mm² and the second change is 20 mm², when the area change of the first reference region 815 and the second reference region 817 is 15 mm², the electronic device can scroll down through the content displayed on the touch screen according to the movement of the touch point. For example, when determining that the area change of the first reference region 815 and the second reference region 817 exceeds the first change and falls below the second change, the electronic device can scroll down through the content displayed on the touch screen according to the movement of the touch point. The first change corresponds to the reduction threshold for determining whether to reduce the content region, and the second change corresponds to the magnification threshold for determining whether to magnify the content region.

For example, when the area change of the first reference region 815 and the second reference region 817 does not exceed the threshold, the electronic device may scroll down through the content displayed on the touch screen according to the movement of the first touch.

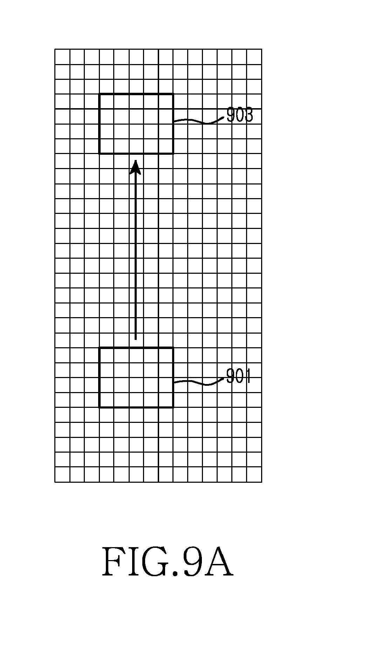

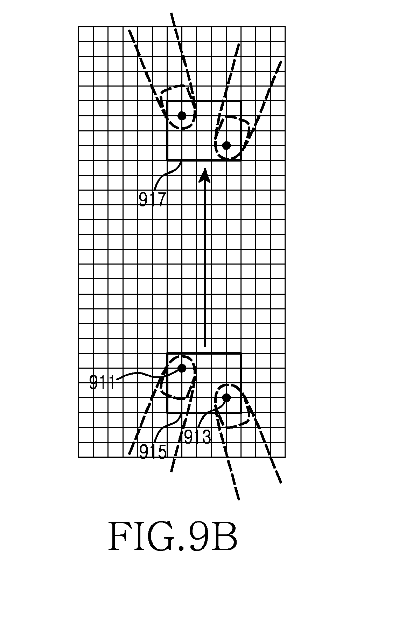

FIGS. 9A and 9B illustrate scrolling-up based on an area change of a reference region according to an exemplary embodiment of the present invention.

Referring to FIG. 9A, the electronic device generates a first reference region 901 by considering at least one touch information detected in the content region displayed on the touch screen. For example, the electronic device generates the first reference region 901 by considering a maximum value and a minimum value of x coordinate values, and considering a maximum value and a minimum value of y coordinate values of the touch points. For example, the electronic device may generate the first reference region 901 by considering a line segment joining intersection points closest to the touch points. When detecting the single touch, the electronic device may generate the quadrangular reference region 901 of the minimum unit based on the coordinates of the touch point. The minimum unit may be set to a value greater than zero.

When detecting the movement of at least one touch, the electronic device generates a second reference region 903 by considering the changed touch information.

Next, when the area change of the first reference region 901 and the second reference region 903 falls below the threshold, the electronic device can scroll up through the content region according to the movement of the touch point. In so doing, the area change can be represented by at least one of the area change, the pixel number change, and the area change rate of the first reference region 901 and the second reference region 903. For example, when the area change of the first reference region 901 and the second reference region 903 falls below the threshold, the electronic device can scroll up through the content region according to the movement of the touch point. The threshold is predefined according to the function setup of the electronic device, and may be changeable by the user's setting. For example, the user may configure the threshold according to the user's preferences. The content region can include an object displayed in the touch screen of the electronic device. The object can include a graphical object.

As such, when the area change of the first reference region 901 and the second reference region 903 falls below the threshold, the electronic device can scroll up through the content region according to the movement of the touch point. More specifically, when detecting two touches, the electronic device can scroll up through the content region displayed in the touch screen as shown in FIG. 9B. The area change can be represented by at least one of the area change, the pixel number change, and the area change rate of the first reference region 901 and the second reference region 903.

Referring to FIG. 9B, when detecting two touches, the electronic device detects a first intersection point 911 closest to the first touch point and a second intersection point 913 closest to the second touch point. Next, the electronic device generates a first reference region 915 by considering the first intersection point 911 and the second intersection point 913. For example, the electronic device generates the first reference region 915 by considering a maximum value and a minimum value of x coordinate values, and considering a maximum value and a minimum value of y coordinate values of the intersection points 911 and 913. For example, the electronic device may generate the first reference region 915 by considering a line segment joining the first intersection point 911 and the second intersection point 913.

When detecting the movement of at least one of the first touch and the second touch, the electronic device generates a second reference region 917 by considering the changed touch information.

Next, when the area change of the first reference region 915 and the second reference region 917 falls below the threshold, the electronic device can scroll up through the content region according to the movement of the touch point. At this time, the area change can be represented by at least one of the area change, the pixel number change, and the area change rate of the first reference region 915 and the second reference region 917.

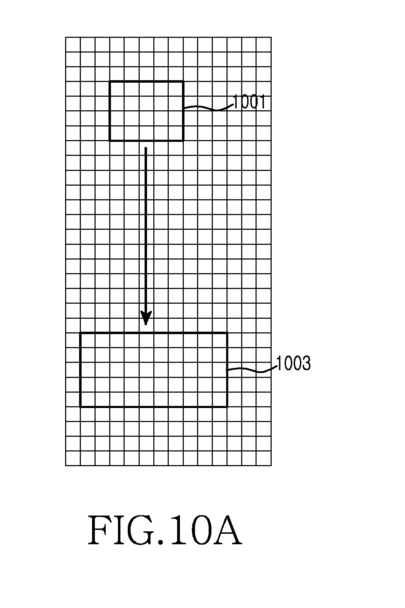

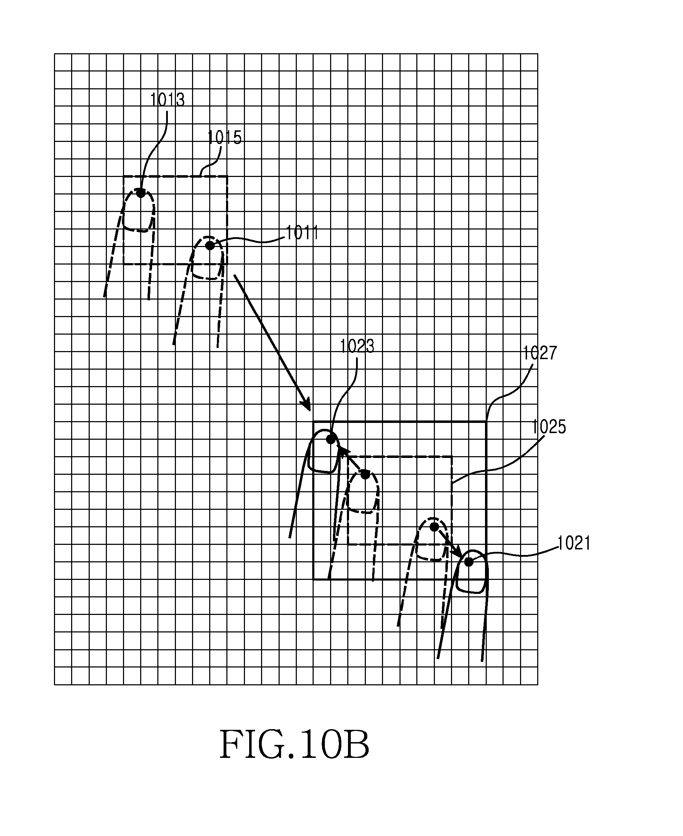

FIGS. 10A and 10B illustrate display magnification based on an area change of a reference region according to an exemplary embodiment of the present invention.

Referring to FIG. 10A, the electronic device generates a first reference region 1001 by considering at least one touch information detected in the content region displayed on the touch screen.

When detecting the movement of at least one touch, the electronic device generates a second reference region 1003 by considering the changed touch information.

Next, the electronic device determines whether to magnify/reduce the content region by considering at least one of the area change, the pixel number change, and the area change rate of the first reference region 1001 and the second reference region 1003. For example, when the area of the second reference region 1003 is greater than the area of the first reference region 1001 to such an extent so as to exceed the magnification threshold, the electronic device magnifies and displays the content region displayed in the touch screen. In so doing, the electronic device may determine a magnification according to the area change of the first reference region 1001 and the second reference region 1003. For example, when the number of pixels of the second reference region 1003 is greater than the number of pixels of the first reference region 1001 to such an extent so as to exceed the magnification threshold, the electronic device can magnify and display the content region displayed in the touch screen. In so doing, the electronic device may determine the magnification according to the pixel number change of the first reference region 1001 and the second reference region 1003. For example, when the area change of the first reference region 1001 and the second reference region 1003 falls below the magnification threshold, the electronic device may magnify and display the content region displayed in the touch screen. In so doing, the electronic device may determine the magnification according to the area change of the first reference region 1001 and the second reference region 1003. The magnification threshold is predefined according to the function setup of the electronic device, and may be changeable by the user's setting. For example, the user may configure the magnification threshold according to the user's preferences. The content region can include an object displayed in the touch screen of the electronic device. The object can include a graphical object.

As such, the electronic device can magnify and display the content region by considering at least one of the area change, the pixel number change, and the area change rate of the first reference region 1001 and the second reference region 1003. In detail, when detecting two touches, the electronic device can magnify and display the content region displayed in the touch screen as shown in FIG. 10B.

Referring to FIG. 10B, when detecting two touches, the electronic device detects a first intersection point 1011 closest to the first touch point and a second intersection point 1013 closest to the second touch point. Next, the electronic device generates a first reference region 1015 by considering the first intersection point 1011 and the second intersection point 1013. For example, the electronic device can generate the first reference region 1015 to have the line segment joining the first intersection point 1011 and the second intersection point 1013 as the diagonal and to cover the pixels including the first intersection point 1011 and the second intersection point 1013. For example, the electronic device generates the first reference region 1015 by considering a maximum value and a minimum value of x coordinate values, and considering a maximum value and a minimum value of y coordinate values of the intersection points 1011 and 1013. In so doing, the electronic device generates the first reference region 1015 by applying the offset to the maximum/minimum values of the x coordinate value and the maximum/minimum values of the y coordinate value.

When detecting the movement of the first touch and the second touch, the electronic device generates a second reference region 1025 by considering the changed touch information 1021 and 1023.

Next, the electronic device determines whether to magnify/reduce the content region by considering at least one of the area change, the pixel number change, and the area change rate of the first reference region 1015 and the second reference region 1025. For example, when the area of the second reference region 1025 is greater than the area of the first reference region 1015 to such an extent so as to exceed the magnification threshold, the electronic device magnifies and displays the content region displayed in the touch screen. In so doing, the electronic device may determine the magnification according to the area change of the first reference region 1015 and the second reference region 1025. For example, when the pixels (e.g., 90 pixels) of the second reference region 1025 is greater than the pixels (e.g., 30 pixels) of the first reference region 1015 to such an extent so as to exceed the magnification threshold, the electronic device can magnify and display the content region displayed in the touch screen. In so doing, the electronic device may determine the magnification according to the pixel number change of the first reference region 1015 and the second reference region 1025. For example, when the area change of the first reference region 1015 and the second reference region 1025 exceeds the magnification threshold, the electronic device may magnify and display the content region displayed in the touch screen. In so doing, the electronic device may determine the magnification according to the area change of the first reference region 1015 and the second reference region 1025. When the electronic device determines that the second reference region 1025 is to be magnified, the electronic device may display the magnified content region 1027.

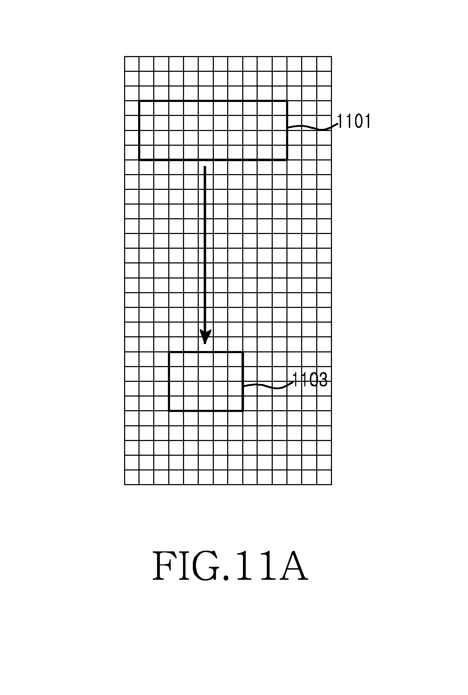

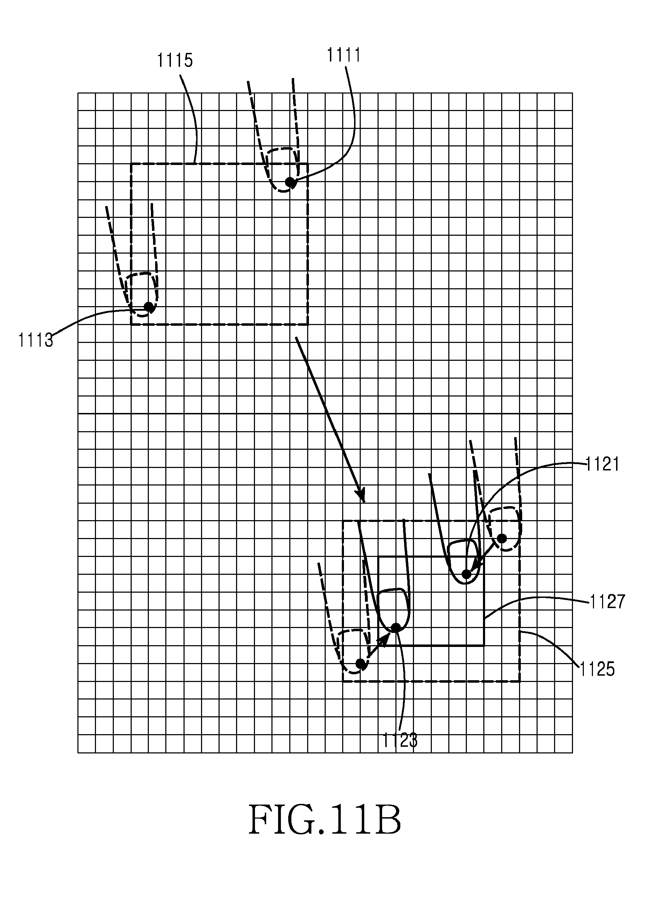

FIGS. 11A and 11B illustrate display reduction based on an area change of a reference region according to an exemplary embodiment of the present invention.

Referring to FIG. 11A, the electronic device generates a first reference region 1101 by considering at least one touch information detected in the content region displayed on the touch screen.

When detecting the movement of at least one touch, the electronic device generates a second reference region 1103 by considering the changed touch information.

Next, the electronic device determines whether to magnify/reduce the content region by considering at least one of the area change, the pixel number change, and the area change rate of the first reference region 1101 and the second reference region 1103. For example, when the area of the second reference region 1103 is smaller than the area of the first reference region 1101 to such an extent so as to exceed the reduction threshold, the electronic device reduces and displays the content region displayed in the touch screen. In so doing, the electronic device may determine the reduction according to the area change of the first reference region 1101 and the second reference region 1103. For example, when the pixels of the second reference region 1103 is smaller than the pixels of the first reference region 1101 to such an extent so as to exceed the reduction threshold, the electronic device can reduce and display the content region displayed in the touch screen. In so doing, the electronic device may determine the reduction according to the pixel number change of the first reference region 1101 and the second reference region 1103. For example, when the area change of the first reference region 1101 and the second reference region 103 falls below the reduction threshold, the electronic device may reduce and display the content region displayed in the touch screen. In so doing, the electronic device may determine the reduction according to the area change of the first reference region 1101 and the second reference region 1103. The reduction threshold is predefined according to the function setup of the electronic device, and changeable by the user's setting. For example, the user may configure the reduction threshold according to the user's preferences. The content region can include an object displayed in the touch screen of the electronic device. The object can include a graphical object.

As such, the electronic device can reduce and display the content region by considering at least one of the area change, the pixel number change, and the area change rate of the first reference region 1101 and the second reference region 1103. In detail, when detecting two touches, the electronic device can reduce and display the content region displayed in the touch screen as shown in FIG. 11B.

Referring to FIG. 11B, when detecting two touches, the electronic device detects a first intersection point 1111 closest to the first touch point and a second intersection point 1113 closest to the second touch point. Next, the electronic device generates a first reference region 1115 by considering the first intersection point 1111 and the second intersection point 1113. For example, the electronic device can generate the first reference region 1115 to have the line segment joining the first intersection point 1111 and the second intersection point 1113 as the diagonal and to cover the pixels including the first intersection point 1111 and the second intersection point 1113. For example, the electronic device generates the first reference region 1115 by considering a maximum value and a minimum value of x coordinate values and considering a maximum value and a minimum value of y coordinate values of the intersection points 1111 and 1113. In so doing, the electronic device generates the first reference region 1115 by applying the offset to the maximum/minimum values of the x coordinate value and the maximum/minimum values of the y coordinate value.

When detecting the movement of the first touch and the second touch, the electronic device generates a second reference region 1125 by considering the changed touch information 1121 and 1123.

Next, the electronic device determines whether to magnify/reduce the content region by considering at least one of the area change, the pixel number change, and the area change rate of the first reference region 1115 and the second reference region 1125. For example, when the area of the second reference region 1125 is smaller than the area of the first reference region 1115 to such an extent so as to exceed the reduction threshold, the electronic device reduces and displays the content region displayed in the touch screen. In so doing, the electronic device may determine the magnification according to the area change of the first reference region 1115 and the second reference region 1125. For example, when the pixels (e.g., 30 pixels) of the second reference region 1125 is smaller than the pixels (e.g., 90 pixels) of the first reference region 1115 to such an extent so as to exceed the reduction threshold, the electronic device can reduce and display the content region displayed in the touch screen. In so doing, the electronic device may determine the magnification according to the pixel number change of the first reference region 1115 and the second reference region 1125. For example, when the area change rate of the first reference region 1115 and the second reference region 1125 falls below the reduction threshold, the electronic device may reduce and display the content region displayed in the touch screen. In so doing, the electronic device may determine the magnification according to the area change rate of the first reference region 1115 and the second reference region 1125. When the electronic device determines that the second reference region 1125 is to be reduced, the electronic device may display the reduced content region 1127.

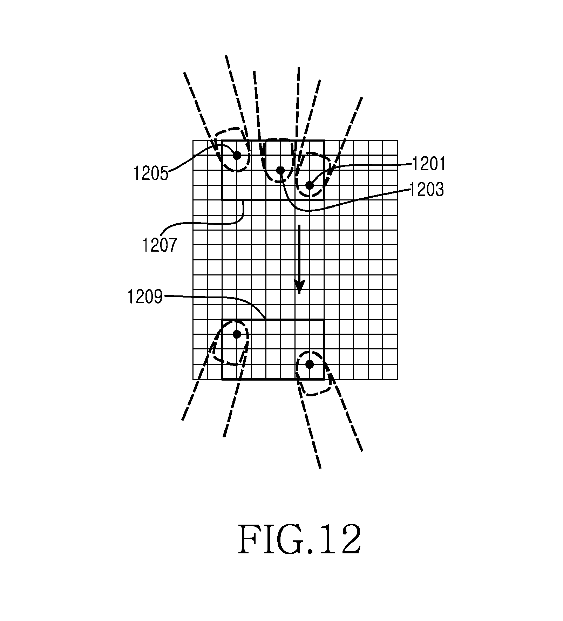

FIG. 12 illustrates a scrolling by a multi-touch according to an exemplary embodiment of the present invention.

Referring to FIG. 12, when detecting three touches 1201, 1203, and 1205 through the content region displayed in the touch screen as shown in FIG. 12, the electronic device determines maximum/minimum values of the x coordinate value and maximum/minimum values of the y coordinate value by comparing the x coordinate values and the y coordinate values of the touches 1201, 1203, and 1205. Next, the electronic device generates a first reference region 1207 by considering the maximum/minimum values of the x coordinate value and the maximum/minimum values of the y coordinate value.

When the movement of at least one touch is detected and one touch is released, the electronic device generates a second reference region 1209 by considering the changed touch information according to the change of the touch point. For example, the electronic device determines maximum/minimum values of the x coordinate value and determines maximum/minimum values of the y coordinate value by considering the touch information according to the movement of the touch point. Next, the electronic device generates a second reference region 1209 by considering the maximum/minimum values of the x coordinate value and the maximum/minimum values of the y coordinate value.

Next, when the area change of the first reference region 1207 and the second reference region 1209 falls below the threshold, the electronic device can scroll down through the content region according to the movement of the touch point. In so doing, the area change can be represented by at least one of the area change, the pixel number change, and the area change rate of the first reference region 1207 and the second reference region 1209. For example, when the area change of the first reference region 1207 and the second reference region 1209 falls below the threshold, the electronic device can scroll down through the content region according to the movement of the touch point. The threshold is predefined according to the function setup of the electronic device, and may be changeable by the user's setting. For example, the user may configure the threshold according to the user's preferences. The content region can include an object displayed in the touch screen of the electronic device. The object can include a graphical object.

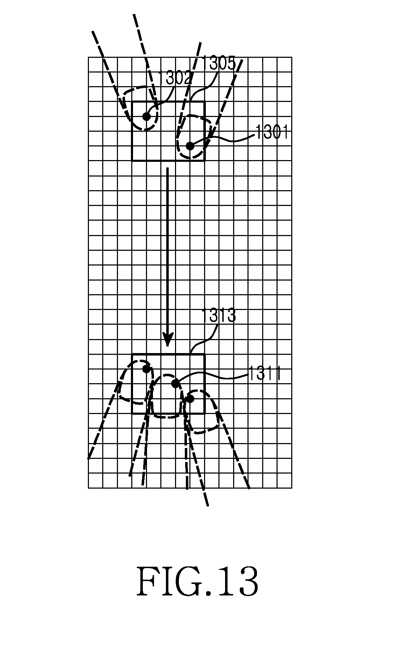

FIG. 13 illustrates a scrolling by a multi-touch according to an exemplary embodiment of the present invention.

Referring to FIG. 13, when detecting two touches 1301 and 1302 through the content region displayed in the touch screen as shown in FIG. 13, the electronic device determines maximum/minimum values of the x coordinate value and maximum/minimum values of the y coordinate value by comparing the x coordinate values and the y coordinate values of the touches 1301 and 1302. Next, the electronic device generates a first reference region 1305 by considering the maximum/minimum values of the x coordinate value and the maximum/minimum values of the y coordinate value.

When the movement of at least one touch is detected and one more touch 1311 is additionally detected, the electronic device generates a second reference region 1313 by considering the changed touch information according to the change of the touch point and additional touch information 1311. For example, the electronic device determines maximum/minimum values of the x coordinate value and maximum/minimum values of the y coordinate value by considering the touch information based on the change of the touch point and the additional touch information 1311. Next, the electronic device generates a second reference region 1313 by considering the maximum/minimum values of the x coordinate value and the maximum/minimum values of the y coordinate value.

Next, when the area change of the first reference region 1305 and the second reference region 1313 falls below the threshold, the electronic device can scroll down through the content region according to the movement of the touch point. In so doing, the area change can be represented by at least one of the area change, the pixel number change, and the area change rate of the first reference region 1305 and the second reference region 1313. For example, when the area change of the first reference region 1305 and the second reference region 1313 falls below the threshold, the electronic device can scroll down through the content region according to the movement of the touch point. The threshold is predefined according to the function setup of the electronic device, and may be changeable by the user's setting. For example, the user may configure the threshold according to the user's preferences. The content region can include an object displayed in the touch screen of the electronic device. The object can include a graphical object.

According to exemplary embodiments of the present invention, the electronic device generates the quadrangular reference region to determine whether to magnify/reduce based on the touch information. In so doing, the electronic device can generate a square or rectangular reference region according to the touch information.

According to exemplary embodiments of the present invention, rather than generating the quadrangular shape, the electronic device can generate circular and oval reference regions and polygonal reference regions such as triangle, pentagon, hexagon, and rhombus. In so doing, the electronic device can generate the reference regions of the same shape before/after the touch movement.

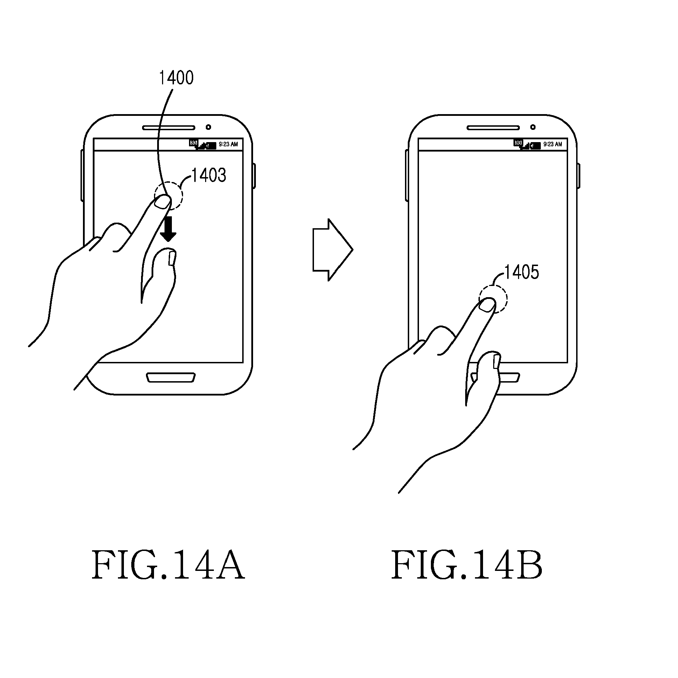

FIGS. 14A and 14B depict a circular reference region generated based on a single touch according to an exemplary embodiment of the present invention.

Referring to FIGS. 14A and 14B, the electronic device can detect at least one touch of the user or the object through the content region displayed in the touch screen. With reference to FIGS. 14A and 14B, it is assumed that the electronic device detects a single touch in the content region displayed in the touch screen.

Upon detecting a first touch as shown in FIG. 14A, the electronic device generates a circular reference region 1403 having a diameter of a reference length based on first touch information. For example, the electronic device can generate the first circular reference region 1403 having the diameter of the reference length based on a first touch point 1400. For example, the electronic device detects an intersection point closest to the first touch point 1400 among the intersection points of the pixels. Next, the electronic device may generate the first circular reference region 1403 having the diameter of the reference length based on the detected intersection point.

When the first touch moves as shown in FIG. 14B, the electronic device generates a second reference region 1405 by considering the moved location information of the first touch. For example, the electronic device may generate a second circular reference region 1405 having the diameter of the reference length based on the moved point of the first touch. For example, the electronic device detects an intersection point closest to the moved point of the first touch among the intersection points of the pixels. Next, the electronic device may generate the second circular reference region 1405 having the diameter of the reference length based on the detected intersection point.

In so doing, the electronic device can scroll through the display according to the movement of the first touch by considering at least one of the area change and the area change rate of the first reference region 1403 and the second reference region 1405. For example, when the area change of the first reference region 1403 and the second reference region 1405 does not exceed the threshold, the electronic device can scroll through the content displayed on the touch screen according to the movement of the first touch. More specifically, based on the assumption that the area of the first reference region 1403 is 84 mm², the first change is 0 mm² and the second change is 20 mm², when the area change of the first reference region 1403 and the second reference region 1405 is 0 mm², the electronic device can scroll through the content displayed on the touch screen according to the movement of the touch point. For example, when the area change of the first reference region 1403 and the second reference region 1405 exceeds the first change and falls below the second change, the electronic device can scroll through the content displayed on the touch screen according to the movement of the touch point. The first change corresponds to the reduction threshold for determining whether to reduce the content region, and the second change corresponds to the magnification threshold for determining whether to magnify the content region.

For example, when the area change of the first reference region 1403 and the second reference region 1405 does not exceed the threshold, the electronic device may scroll through the content displayed on the touch screen according to the movement of the first touch.

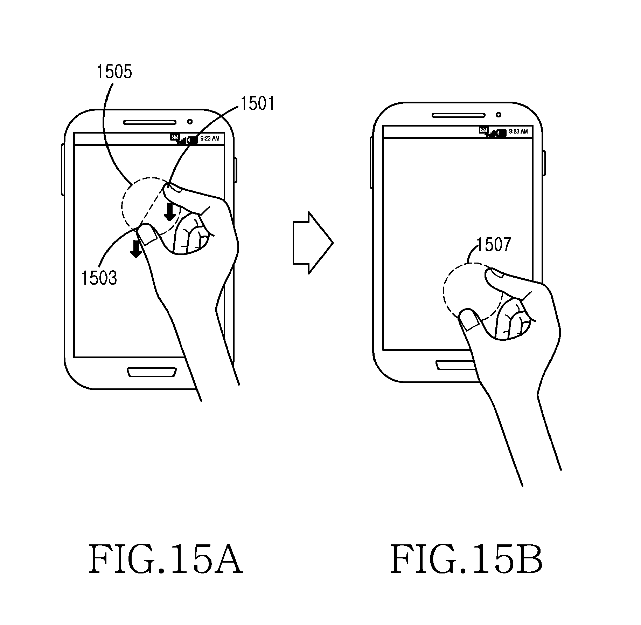

FIGS. 15A and 15B illustrate a circular reference region generated based on a multi-touch according to an exemplary embodiment of the present invention.

Referring to FIGS. 15A and 15B, the electronic device can detect at least one touch of the user or the object through the content region displayed in the touch screen. With reference to FIGS. 15A and 15B, it is assumed that the electronic device detects two touches in the content region displayed in the touch screen.

Upon detecting two touches as shown in FIG. 15A, the electronic device generates a circular reference region 1505 having a diameter defined based on touch information. For example, the electronic device can generate the first circular reference region 1505 having the diameter corresponding to the line segment joining a first touch point 1501 and a second touch point 1503. For example, the electronic device detects a first intersection point closest to the first touch point 1501 and a second intersection point closest to the second touch point 1503 among the intersection points of the pixels. Next, the electronic device may generate the first circular reference region 1505 having the diameter corresponding to the line segment joining the first intersection point and the second intersection point.

When at least one touch moves as shown in FIG. 15B, the electronic device generates a second reference region 1507 by considering the changed touch information. For example, the electronic device can generate the second circular reference region 1507 having the diameter corresponding to the line segment joining the changed touch points. For example, the electronic device detects intersection points closest to the changed touch points among the intersection points of the pixels. Next, the electronic device may generate a second circular reference region 1507 having a diameter corresponding to the line segment joining the detected intersection points.

In so doing, the electronic device can scroll through the display according to the touch movement by considering the area change or the area change rate of the first reference region 1505 and the second reference region 1507. For example, when the area change of the first reference region 1505 and the second reference region 1507 does not exceed the threshold, the electronic device can scroll through the content displayed on the touch screen according to the touch movement. More specifically, when the area change of the first reference region 1505 and the second reference region 1507 exceeds the first change and falls below the second change, the electronic device can scroll through the content displayed on the touch screen according to the touch movement. The first change corresponds to the reduction threshold for determining whether to reduce the content region, and the second change corresponds to the magnification threshold for determining whether to magnify the content region.

For example, when the area change rate of the first reference region 1505 and the second reference region 1507 does not exceed the threshold, the electronic device may scroll through the content displayed on the touch screen according to the touch movement.

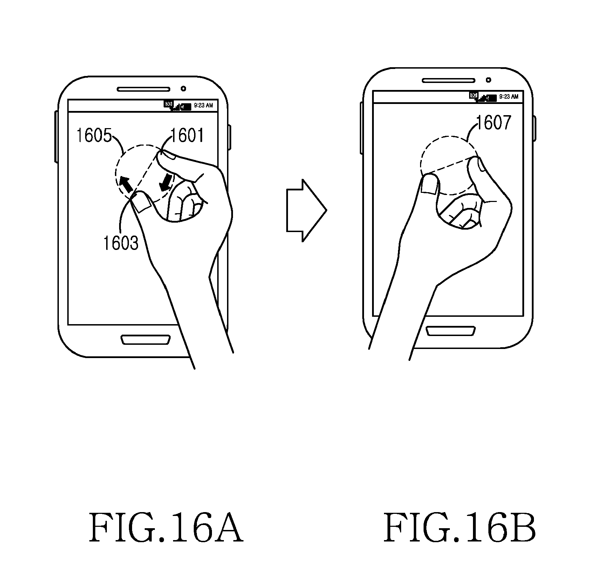

FIGS. 16A and 16B illustrate an object direction change based on a location change of a multi-touch according to an exemplary embodiment of the present invention.

Referring to FIGS. 16A and 16B, the electronic device can detect at least one touch of the user or the object through the content region displayed in the touch screen. With reference to FIGS. 16A and 16B, it is assumed that the electronic device detects two touches in the content region displayed in the touch screen.

When detecting two touches as shown in FIG. 16A, the electronic device generates a circular reference region 1605 having a diameter defined based on touch information 1601 and 1603.

When the touch rotates based on the centre of the first reference region 1605 as shown in FIG. 16B, the electronic device generates a second reference region 1607 based on the changed touch information.

When the first reference region 1605 and the second reference region 1607 have the same location, the same area, or an area change below the threshold, the electronic device may perform no function at all according to the change of the touch point. For example, the electronic device can rotate objects displayed on the touch screen according to the rotation of the touch. For example, the electronic device may scroll through the content region displayed on the touch screen according to the rotation of the touch.

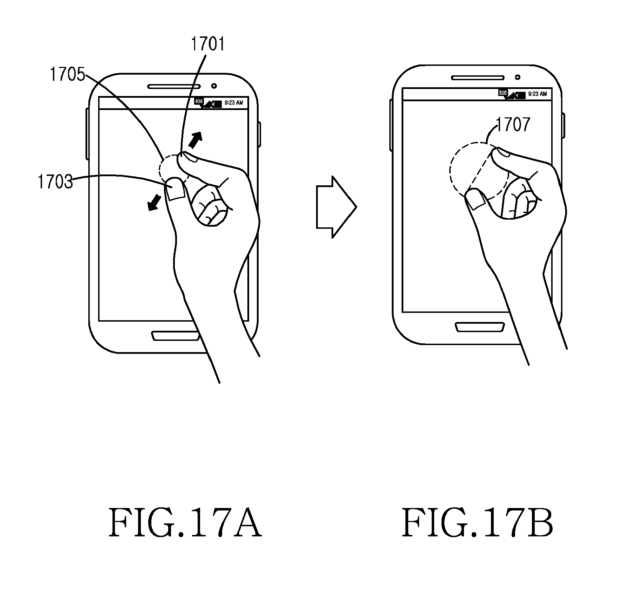

FIGS. 17A and 17B illustrate display magnification by considering an area change of a circular reference region according to an exemplary embodiment of the present invention.

Referring to FIGS. 17A and 17B, the electronic device can detect at least one touch of the user or the object through the content region displayed in the touch screen. With reference to FIGS. 17A and 17B, it is assumed that the electronic device detects two touches in the content region displayed in the touch screen.

When detecting the two touches as shown in FIG. 17A, the electronic device generates a circular reference region 1705 having a diameter defined based on touch information 1701 and 1703.

When at least one touch moves as shown in FIG. 17B, the electronic device generates a second reference region 1707 based on the changed touch information.

In so doing, the electronic device determines whether to magnify/reduce the content region by considering at least one of the area change and the area change rate of the first reference region 1705 and the second reference region 1707. For example, when the area of the second reference region 1707 is greater than the area of the first reference region 1705 to exceed the magnification threshold, the electronic device magnifies and displays the content region displayed in the touch screen. In so doing, the electronic device may determine the magnification according to the area change of the first reference region 1705 and the second reference region 1707. For example, when the area change rate of the first reference region 1705 and the second reference region 1707 exceeds the magnification threshold, the electronic device may magnify and display the content region displayed in the touch screen. In so doing, the electronic device may determine the magnification according to the area change rate of the first reference region 1705 and the second reference region 1707.

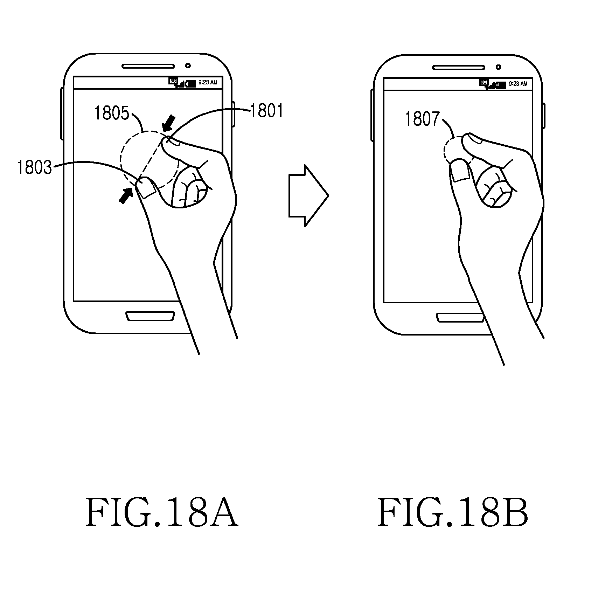

FIGS. 18A and 18B illustrate display reduction by considering an area change of a circular reference region according to an exemplary embodiment of the present invention.

Referring to FIGS. 18A and 18B, the electronic device can detect at least one touch of the user or the object through the content region displayed in the touch screen. With reference to FIGS. 18A and 18B, it is assumed that the electronic device detects two touches in the content region displayed in the touch screen.

When detecting the two touches as shown in FIG. 18A, the electronic device generates a circular reference region 1805 having a diameter defined based on touch information 1801 and 1803.

When at least one touch moves as shown in FIG. 18B, the electronic device generates a second reference region 1807 based on the changed touch information.

The electronic device determines whether to magnify/reduce the content region by considering at least one of the area change and the area change rate of the first reference region 1805 and the second reference region 1807. For example, when the area of the second reference region 1807 is smaller than the area of the first reference region 1805 to exceed the reduction threshold, the electronic device reduces and displays the content region displayed in the touch screen. In so doing, the electronic device may determine the magnification according to the area change of the first reference region 1805 and the second reference region 1807. For example, when the area change rate of the first reference region 1805 and the second reference region 1807 falls below the reduction threshold, the electronic device may reduce and display the content region displayed in the touch screen. In so doing, the electronic device may determine the magnification according to the area change rate of the first reference region 1805 and the second reference region 1807.

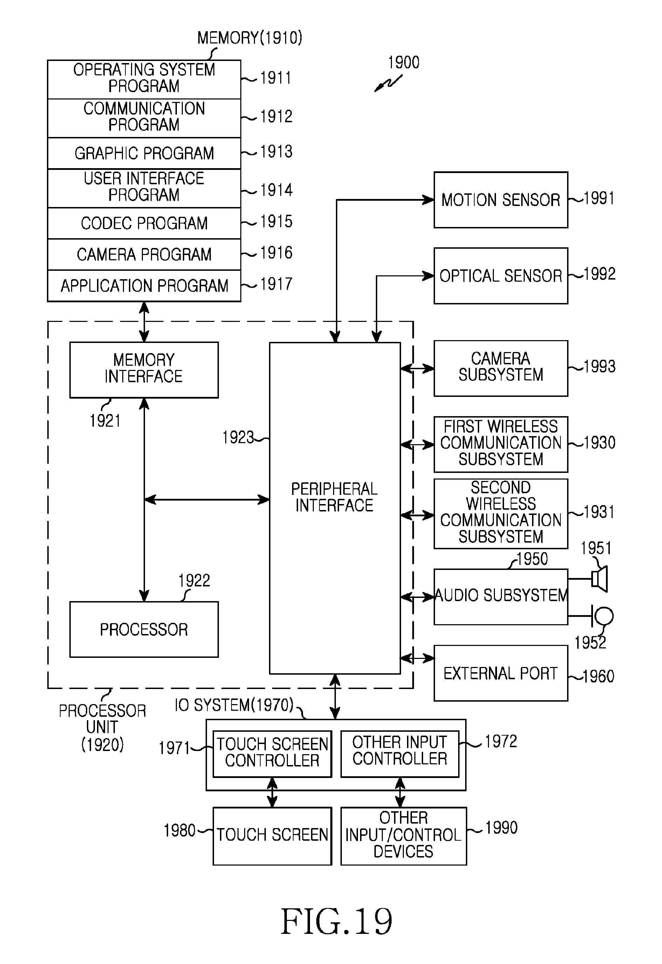

FIG. 19 illustrates an electronic device according to an exemplary embodiment of the present invention.

Referring to FIG. 19, the electronic device 1900 includes a memory 1910, a processor unit 1920, a first wireless communication subsystem 1930, a second wireless communication subsystem 1931, an audio subsystem 1950, a speaker 1951, a microphone 1952, an external port 1960, an Input Output (IO) system 1970, a touch screen 1980, other input/control devices 1990, a motion sensor 1991, an optical sensor 1992, and a camera subsystem 1993. The various components of the electronic device 1900 can be coupled using one or more communication buses or one or more stream lines. Herein, a plurality of memories 1910 and a plurality of external ports 1960 can be used.

The processor unit 1920 can include a memory interface 1921, one or more processors 1922, and a peripheral interface 1923. The processor unit 1920 may be referred to as a processor.

The processor unit 1920 detects at least one first touch in the content region displayed on the touch screen 1980 and generates the first reference region based on the at least one first touch information. When the movement of at least one touch is detected, the processor unit 1920 generates the second reference region based on the changed touch information. In so doing, the processor unit 1920 can determine the touch function according to the touch movement by considering at least one of the area change, the pixel number change, and the area change rate of the first reference region and the second reference region.

In addition, the processor unit 1920 may magnify/reduce the content region displayed in the touch screen 1980 by considering the touch information of a pre-set zoom region.

The processor 1922 controls the electronic device 1900 to provide various multimedia services using at least one software program. In so doing, the processor 1922 can execute at least one program stored in the memory 1910 and provide the service of the corresponding program. For example, the processor 1922 magnifies/reduces the content displayed in the touch screen 1980 in association with software programs stored in the memory 1910.

The processor 1922 can include a plurality of processors for different functions. For example, the processor 1922 can include at least one of one or more data processors, an image processor, and a codec.

The peripheral interface 1923 interconnects the IO subsystem 1970 and at least one peripheral of the electronic device 1900, with the processor 1922 and the memory interface 1921.

The memory interface 1921 controls access of the component such as processor 1922 or peripheral interface 1923, to the memory 1910.

The electronic device 1900 performs at least one of a voice communication function and a data communication function through one or more wireless communication subsystems 1930 and 1931.

The first wireless communication subsystem 1930 and the second wireless communication subsystem 1931 can be distinguished based on a communication network of the electronic device 1900. For example, the communication network can include at least one of, but not limited to, a Global System for Mobile communication (GSM) network, an Enhanced Data GSM Environment (EDGE) network, a Code Division Multiple Access (CDMA) network, a Wideband Code Division Multiple Access (W-CDMA) network, a Long Term Evolution (LTE) network, an Orthogonal Frequency Division Multiple Access (OFDMA) network, a Wireless Fidelity (Wi-Fi) network, a WiMax network, a Bluetooth network, and/or the like. The electronic device 1900 may integrate the first wireless communication subsystem 1930 and the second wireless communication subsystem 1931 into a single wireless communication subsystem.

The audio subsystem 1950 can be coupled to the speaker 1951 and the microphone 1952 to process input and output of audio streams for voice recognition, voice reproduction, digital recording, and telephone function. For example, the audio subsystem 1950 provides an audio interface with the user through the speaker 1951 and the microphone 1952. For example, when receiving a data signal through the peripheral interface 1923 of the processor unit 1920, the audio subsystem 1950 converts the data stream to an electric signal and sends the electric signal to the speaker 1951. The speaker 1951 converts the electric signal to a sound wave audible by the user and outputs the sound wave. The microphone 1952 converts the sound wave from the user or other sound sources to an electric signal and sends the electric signal to the audio subsystem 1950. The audio subsystem 1950 converts the electric signal received from the microphone 1952 to the audio data signal and sends the audio data signal to the peripheral interface 1923. At this time, the audio subsystem 1950 can include an attachable and detachable ear phone, head phone, or head set.

The external port 1960 is used to connect the electronic device 1900 directly to other electronic devices. The external port 1960 can be referred to as, for example, but not limited to, a Universal Serial Bus (USB) port.

The IO subsystem 1970 can include at least one of a touch screen controller 1971 and other input controller 1972. The touch screen controller 1971 can be coupled to the touch screen 1980 to control the signal input/output of the touch screen 1980. The other input controller 1972 can be coupled to the other input/control devices 1990 to control the signal input/output of the other input/control device 1990.

The touch screen 1980 provides an IO interface between the electronic device 1900 and the user. For example, the touch screen 1980 forwards the user's touch input to the electronic device 1900. In association with the touch screen controller 1971, the touch screen 1980 can detect the touch, the touch movement, and the touch release using, but not limited to, capacitive, resistive, infrared and surface sound wave techniques and a multi-touch detection technique including various proximity sensor arrays or other elements.

The touch screen 1980 displays status information of the electronic device 1900, a character input by the user, a moving picture, and a still picture. For example, the touch screen 1980 provides a visual output to the user. Herein, the visual output can be represented as text, graphic, video, and a combination of these.

The touch screen 1980 can employ various displays, examples of which include at least one of, but are not limited to, Liquid Crystal Display (LCD), Light Emitting Diode (LED), Light emitting Polymer Display (LPD), Organic LED (OLED), Active Matrix OLED (AMOLED), Flexible LED (FLED), and the like.

The other input/control devices 1990 include at least one of one or more hardware buttons, a rocker switch, a thumb wheel, a dial, a stick, a pointer such as stylus, and the like.

The motion sensor 1991 and the optical sensor 1992 are coupled to the peripheral interface 1923 to provide necessary information for the service of the electronic device 1900 to the processor unit 1920. For example, the motion sensor 1991 can detect a motion of the electronic device 1900 and the optical sensor 1992 can detect the light around the electronic device 1900.

The electronic device 1900 can include one or more sensors (not shown) such as a positioning subsystem, a temperature sensor, a bionic sensor, and the like.

The camera subsystem 1993 can perform camera functions such as photo and video clip recording. The camera subsystem 1993 can include an optical sensor employing a Charged Coupled Device (CCD), a Complementary Metal-Oxide Semiconductor (CMOS) device, or the like.

The memory 1910 can be coupled to the memory interface 1921. The memory 1910 can include fast random access memory such as one or more magnetic disc storage devices and/or non-volatile memory, one or more optical storage devices, and/or a flash memory (e.g., NAND and NOR).

The memory 1910 stores at least one program. For example, the memory 1910 includes an operating system program 1911, a communication program 1912, a graphic program 1913, a user interface program 1914, an MPEG program 1915, a camera program 1916, and one or more application programs 1917. The program stored in the memory 1910 may be represented as an instruction set which is a set of instructions.

The operating system program 1911 includes various software components for controlling general system operations. The operating system program 1911 includes software components for memory management and control, storage hardware (device) control and management, and power control and management. The operating system program 1911 processes the normal communication between various hardware devices and the software components (modules). The operating system program 1911 includes any one of WINDOWS, LINUX, Darwin, RTXC, UNIX, OS X, VxWorks, and the like.

The communication program 1912 allows communication with other electronic devices such as computer, server, and/or portable terminal, through the wireless communication subsystems 1930 and 1931 or the external port 1960.

The graphic program 1913 includes various software components for providing and displaying graphics on the touch screen 1980. The term 'graphics' includes text, webpage, icon, digital image, video, animation, and the like.

The user interface program 1914 includes various software components relating to a user interface. In this case, the user interface program 1914 is involved in the status change of a user interface and the condition of the user interface status change.

The codec program 1915 can include software components regarding video file encoding and decoding. The codec program 1915 can include a video stream module such as MPEG module and/or H204 module. The codec program 1915 can include a codec module for various audio files such as Authentication, Authorization, and Accounting (AAA), Adaptive Multi Rate (AMR), Windows Media Audio (WMA), and the like.

The camera program 1916 includes camera related software components for camera related processes and functions.

The application program 1917 includes a browser, an e-mail, an instant message, a word processing, keyboard emulation, an address book, a touch list, a widget, Digital Right Management (DRM), voice recognition, voice reproduction, a position determining function, a location based service, and the like.

According to exemplary embodiments of the present invention, the processor unit 1920 magnifies or reduces the display according to the area (size) change of the reference region. In so doing, when the area of the reference region initially changes, the processor unit 1920 may recognize the change in the area of the reference region as a magnification/reduction event. For example, when detecting one first touch on the touch screen 1980, the processor unit 1920 determines the reference region based on the first touch point as shown in FIG. 2. In contrast, when detecting the multi-touch on the touch screen 1980, the processor unit 1920 determines the reference region based on the multiple touch points as shown in FIG. 3. Hence, when detecting the first touch and the second touch in succession according to the multi-touch, the processor unit 1920 can recognize that the reference region based on the first touch point is changed to the reference region based on the first touch point and the second touch point. At this time, the processor unit 1920 recognizes that the magnification/reduction event takes place. Next, the processor unit 1920 magnifies or reduces the display according to the area change of the reference region. The magnification/reduction event corresponds to a magnification/reduction point for enlarging or reducing the display according to the area change of the reference region.

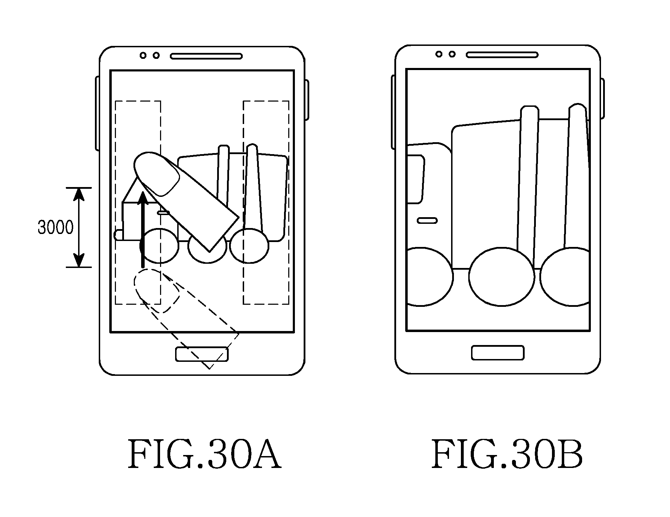

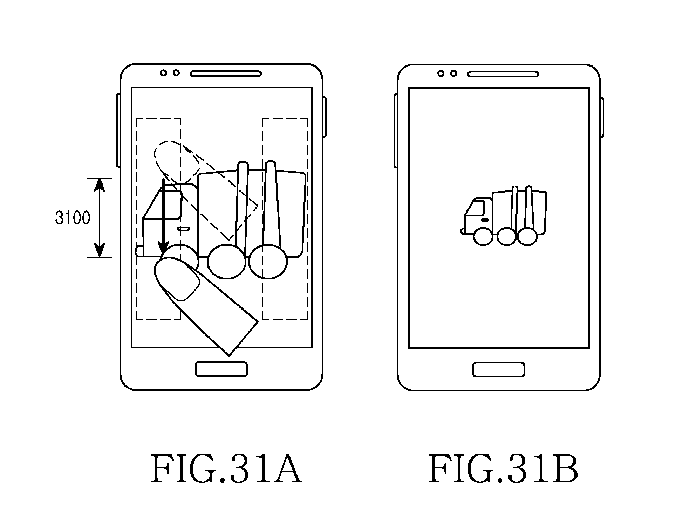

FIGS. 30A and 30B illustrate a display for magnifying a display according to drag information of a zoom region according to an exemplary embodiment of the present invention. FIGS. 31A and 31B illustrate a display for reducing a display according to drag information of a zoom region according to an exemplary embodiment of the present invention.

Referring to FIGS. 19, 30A, 30B, 31A, and 31B, when the area change of the reference region for the magnification/reduction event is not detected, the processor unit 1920 may zoom in or out the display by considering the location of the first touch detected. For example, when detecting the first touch in a0 zoom region, the processor unit 1920 magnifies or reduces the display by considering the drag information based on the first touch detected in the zoom region. In so doing, the processor unit 1920 determines to zoom in or out (e.g., to magnify or reduce) the content according to the drag direction of the zoom region as shown in FIGS. 30A and 30B and FIGS. 31A and 31B. In so doing, the processor unit 1920 determines the magnification based on the drag length. Herein, the drag length includes at least one of a total length of the detected drag, a change value of vertical coordinates of the drag, and a straight line distance from the drag start point to the drag end point. The drag may correspond to an action which changes the first touch point over a reference distance.

For example, when detecting the first touch in the zoom region, the processor unit 1920 may magnify or reduce the display by considering a type of the zoom region of the first touch detected. The zoom region corresponds to a partial region designated for the zoom function in the display region of the touch screen 1980. In so doing, the electronic device 1900 may define one or more zoom regions at different locations in a certain area of the touch screen 1980.

The various functions of the electronic device 1900 as stated above and to be explained, can be executed by hardware and/or software and/or their combination including one or more signal processing and/or Application Specific Integrated Circuits (ASICs).

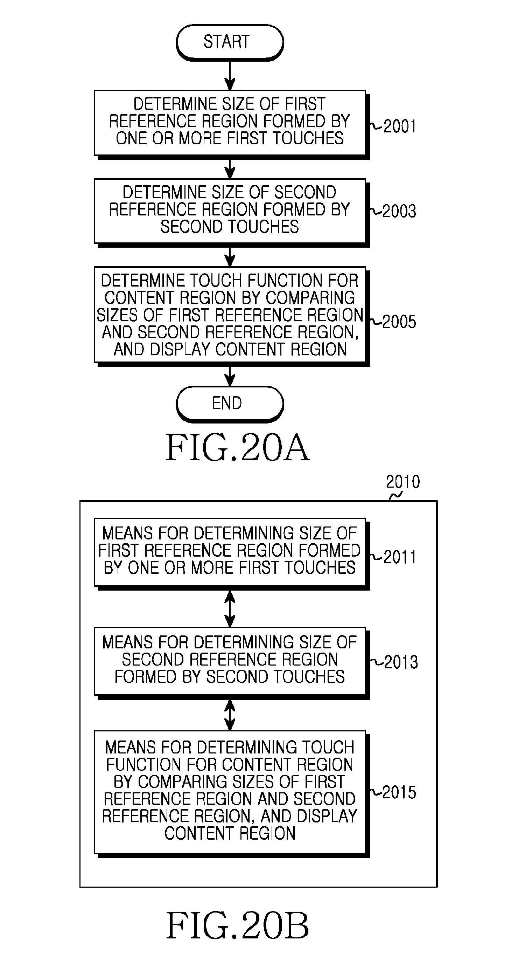

FIG. 20A illustrates a method for magnifying/reducing a display based on an area change of a reference region in an electronic device according to an exemplary embodiment of the present invention.

Referring to FIG. 20A, when detecting at least one first touch in the content region displayed in the touch screen, the electronic device generates the first reference region based on the at least one first touch and determines the area of the first reference region in step 2001.

When detecting the movement of the at least one first touch, the electronic device generates the second reference region based on at least one second touch information according to the touch movement and determines the area of the second reference region in step 2003.

In step 2005, the electronic device determines the touch function according to the touch movement by comparing the areas of the first reference region and the second reference region, and displays the content region according to the touch function based on the touch movement. In so doing, the electronic device can determine the touch function according to the touch movement by considering at least one of the area change, the pixel number change, and the area change rate of the first reference region and the second reference region. For example, when the area change of the first reference region and the second reference region exceeds the magnification threshold, the electronic device magnifies and displays the content region displayed in the touch screen. For example, when the area change of the first reference region and the second reference region falls below the reduction threshold, the electronic device reduces and displays the content region displayed in the touch screen. For example, when the area change of the first reference region and the second reference region exceeds the reduction threshold and falls below the magnification threshold, the electronic device may scroll through the content region according to the touch movement. The content region displayed on the touch screen can correspond to an object displayed in the touch screen. The object can include a graphical object. The magnification/reduction of the content region can correspond to a series of operations for adjusting and displaying a parameter of the object displayed in the touch screen, and the scroll of the content region can correspond to a series of operations for scrolling through the object displayed in the touch screen.

As such, the parameter of the object displayed in the touch screen of the electronic device can be adjusted by zooming in or out the content size displayed in the touch screen. The object displayed in the touch screen of the electronic device can be scrolled through by scrolling up or down through the content displayed in the touch screen.

FIG. 20B illustrates an electronic device for magnifying/reducing a display according to an exemplary embodiment of the present invention.

Referring to FIG. 20B, the electronic device 2010 includes a means 2011 for determining the area of the first reference region, a means 2013 for determining the area of the second reference region, and a means 2015 for determining the touch function.

When detecting at least one first touch in the content region displayed in the touch screen, the means 2011 for determining the area of the first reference region generates the first reference region based on the at least one first touch and determines the area of the first reference region.

When detecting the movement of the at least one first touch, the means 2013 for determining the area of the second reference region generates the second reference region based on at least one second touch information according to the touch movement and determines the area of the second reference region.

The means 2015 for determining the touch function determines the touch function according to the touch movement by comparing the areas of the first reference region and the second reference region, and displays the content region according to the touch function based on the touch movement. In so doing, the means 2015 for determining the touch function can determine the touch function according to the touch movement by considering at least one of the area change, the pixel number change, and the area change rate of the first reference region and the second reference region.

According to exemplary embodiments of the present invention, the means 2011 for determining the area of the first reference region, the means 2013 for determining the area of the second reference region, and the means 2015 for determining the touch function can be included in the processor unit 1920 or the processor 1922 of FIG. 19.

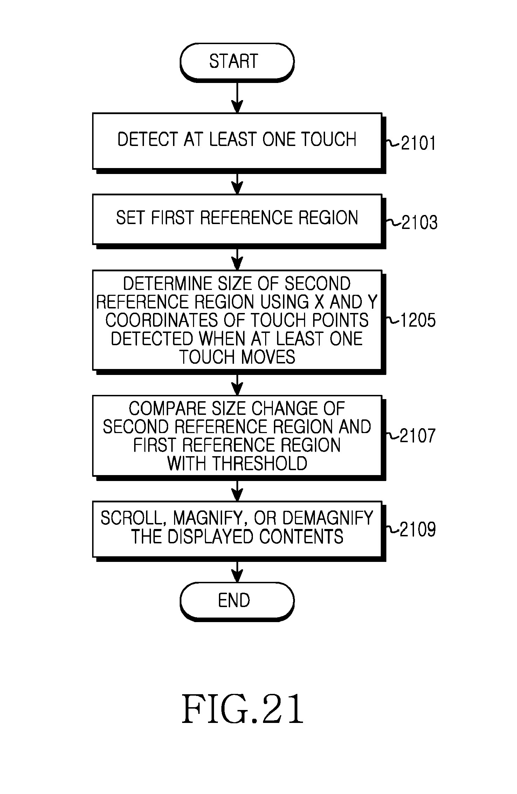

FIG. 21 illustrates a method for magnifying/reducing a display based on an area change of a reference region in an electronic device according to an exemplary embodiment of the present invention.

Referring to FIG. 21, the electronic device determines whether at least one first touch is detected through the content region displayed in the touch screen in step 2101.

Upon detecting the at least one first touch, the electronic device generates the first reference region by considering at least one first touch information in step 2103. For example, when detecting the multiple touches, the electronic device generates the first reference region by considering the maximum/minimum values of the x coordinate values and the maximum/minimum values of the y coordinate values among the coordinate values of the touch points. For example, when detecting the multiple touches, the electronic device can generate the first reference region by considering the maximum/minimum values of the x coordinate values and the maximum/minimum values of the y coordinate values among the coordinate values of the intersection points closest to the touch points in the intersection points of the pixels.

When detecting the movement of the at least one first touch, the electronic device generates the second reference region by considering at least one second touch information according to the touch movement in step 2105. For example, the electronic device generates the second reference region by considering the coordinate value of the touch point which is detected as the touch moves. For example, the electronic device can generate the second reference region by considering the coordinate values of the intersection points closest to the touch point which is detected as the touch moves among the intersection points of the pixels.

In step 2107, the electronic device determines the touch function based on the touch movement by comparing the areas of the first reference region and the second reference region. In so doing, the electronic device can determine the touch function according to the touch movement by considering at least one of the area change, the pixel number change, and the area change rate of the first reference region and the second reference region. When the area difference of the first reference region and the second reference region is smaller than the threshold, the electronic device may recognize no area change of the first reference region and the second reference region.

In step 2109, the electronic device displays the content region according to the touch function based on the touch movement determined in step 2107. For example, when the area change of the first reference region and the second reference region exceeds the magnification threshold, the electronic device magnifies and displays the content region displayed in the touch screen. For example, when the area change of the first reference region and the second reference region falls below the reduction threshold, the electronic device can reduce and display the content region displayed in the touch screen. For example, when the area change of the first reference region and the second reference region exceeds the reduction threshold and falls below the magnification threshold, the electronic device may scroll through the content region according to the touch movement. The content region displayed on the touch screen can correspond to an object displayed in the touch screen. The object can include a graphical object. The magnification/reduction of the content region can correspond to the series of the operations for adjusting and displaying the parameter of the object displayed in the touch screen, and the scroll of the content region can correspond to the series of the operations for scrolling through the object displayed in the touch screen.

As such, the parameter of the object displayed in the touch screen of the electronic device can be adjusted by zooming in or out the content size displayed in the touch screen. The object displayed in the touch screen of the electronic device can be scrolled through by scrolling up or down through the content displayed in the touch screen.

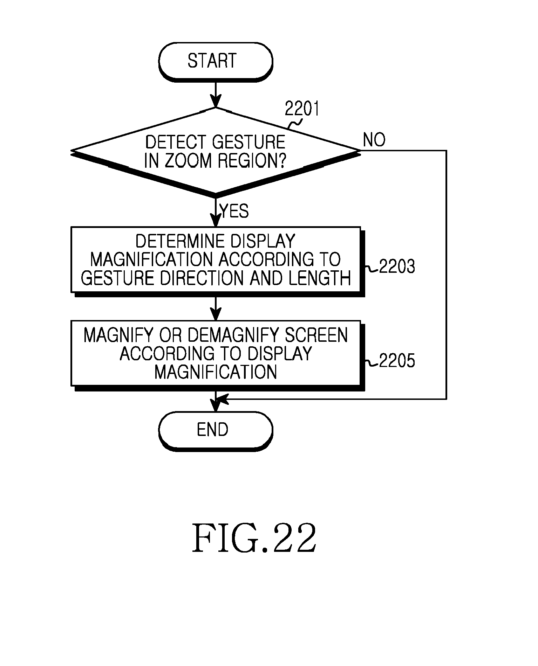

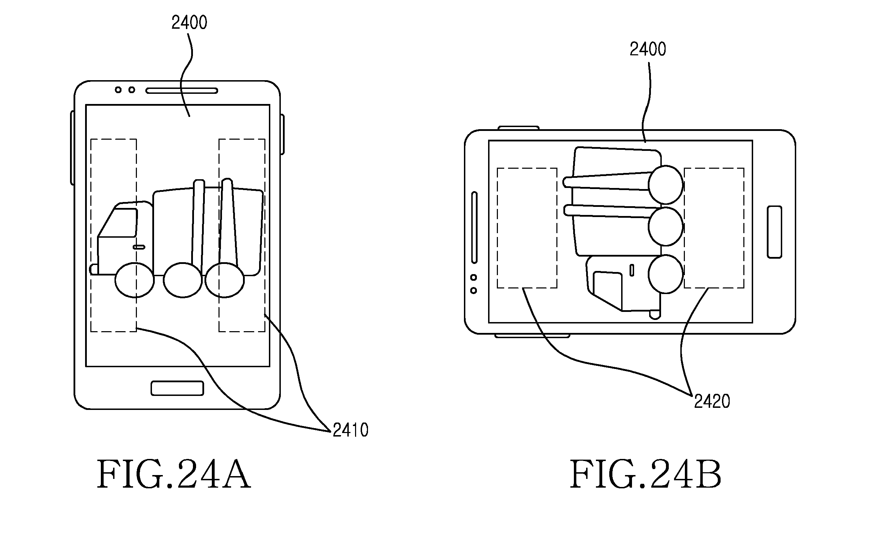

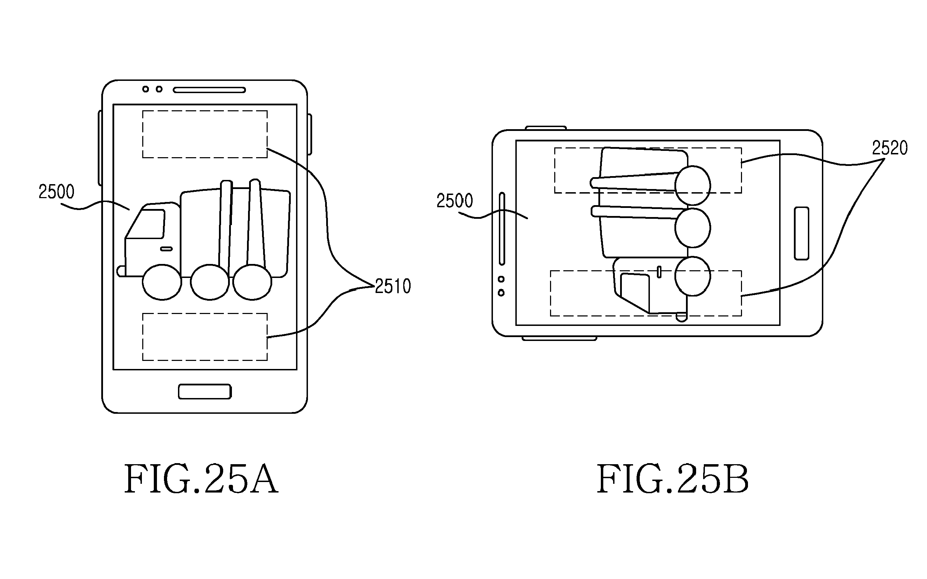

FIG. 22 illustrates a method for magnifying or reducing a display based on a gesture of a zoom region in an electronic device according to an exemplary embodiment of the present invention. FIGS. 24A through 24B illustrate a display for a zoom region according to an exemplary embodiment of the present invention. FIGS. 25A through 25B illustrate a display for a zoom region according to an exemplary embodiment of the present invention.

Referring to FIGS. 22, 24A, 24B, 25A, and 25B, the electronic device determines whether the gesture (e.g., a drag) is detected in the zoom region in step 2201. For example, a size and a location of zoom regions 2410, 2420, 2510 and 2520 of the content 2400 and 2500, respectively, may change according to the display type of the touch screen as shown in FIGS. 24A and 24B and FIGS. 25A and 25B.

When detecting the drag in the zoom region, the electronic device determines the display magnification according to the direction and the length of the drag in the zoom region in step 2203. More specifically, the electronic device determines to magnify or reduce the content displayed in the touch screen according to the drag direction of the zoom region, and determines the magnification according to the drag length. For example, when detecting the upward drag in the zoom region as shown in FIG. 30A, the electronic device recognizes the display magnification. At this time, the electronic device determines the magnification in proportion to a drag length 3000 in the zoom region. For example, when detecting the downward drag in the zoom region as shown in FIG. 31A, the electronic device recognizes the display reduction. At this time, the electronic device determines the magnification in proportion to a drag length 3100 in the zoom region. The drag length and the display magnification can establish a linear equation or a higher-degree equation. The drag length includes at least one of the total length of the detected drag, the change value of the vertical coordinates of the drag, and the straight line distance from the drag start point to the drag end point. When the touch point changes over a reference range, the electronic device may recognize the drag detected.

In step 2205, the electronic device magnifies or reduces and displays the content displayed in the touch screen according to the display magnification determined based on the drag direction and length. For example, when determining the magnification based on the upward drag length 3000 in the zoom region as shown in FIG. 30A, the electronic device magnifies the content displayed in the touch screen in proportion to the drag length change 3000 as shown in FIG. 30B. For example, when determining the magnification based on the downward drag length 3100 in the zoom region as shown in FIG. 31A, the electronic device may reduce and display the content displayed in the touch screen in proportion to the drag length change 3100 as shown in FIG. 31B. In so doing, the electronic device magnifies or reduces the corresponding content based on the centre of the content displayed in the touch screen.

Next, the electronic device finishes this process.

According to exemplary embodiments of the present invention, the electronic device magnifies or reduces the display according to the drag of one direction in the zoom region.

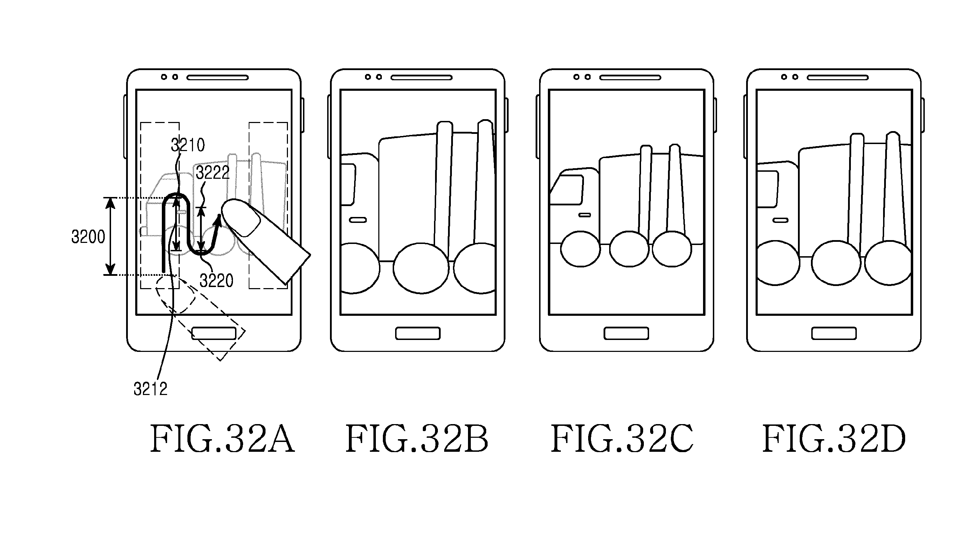

FIGS. 32A to 32D illustrate a display for magnifying or reducing a display by considering an inflection point of a drag in a zoom region according to an exemplary embodiment of the present invention.

Referring to FIGS. 32A to 32B, according to exemplary embodiments of the present invention, when detecting the drag including an inflection point in the zoom region, the electronic device may change a zoom mode based on the inflection point. For example, when the drag in the zoom region includes a first inflection point 3210 and a second inflection point 3220 as shown in FIG. 32A, the electronic device changes the zoom mode at every inflection point 3210 and 3220. More specifically, when detecting the upward drag in the zoom region as shown in FIG. 32A, the electronic device magnifies the display in proportion to a drag length change 3200 up to the first inflection point 3210 as shown in FIG. 32B. The drag length change and the display magnification can establish a linear equation or a higher-degree equation.

Next, the electronic device reduces the content in proportion to a drag length change 3212 from the first inflection point 3210 to the second inflection point 3220 in the zoom region as shown in FIG. 32C.

Next, the electronic device magnifies the content in proportion to a drag length change 3222 from the second inflection point 3220 as shown in FIG. 32D. Even when the drag starting in the zoom region gets out of the zoom region, the electronic device can magnify or reduce the content displayed in the touch screen according to the drag information. For example, when the drag starting in the zoom region gets out of the zoom region, the electronic device may abort the magnification or the reduction of the content displayed in the touch screen. Hence, when the drag starting in the zoom region gets out of the zoom region, the electronic device can scroll through the content along the drag direction.

In contrast, when the drag starting outside the zoom region enters the zoom region, the electronic device recognizes the absence of the zoom region. For example, the electronic device executes an event corresponding to the drag starting outside the zoom region even within the zoom region. For example, when the drag starting outside the zoom region enters the zoom region, the electronic device may magnify or reduce the display according to the drag direction and length detected in the zoom region.

According to exemplary embodiments of the present invention, the electronic device magnifies or reduces the display by considering the drag information detected in the zoom region.

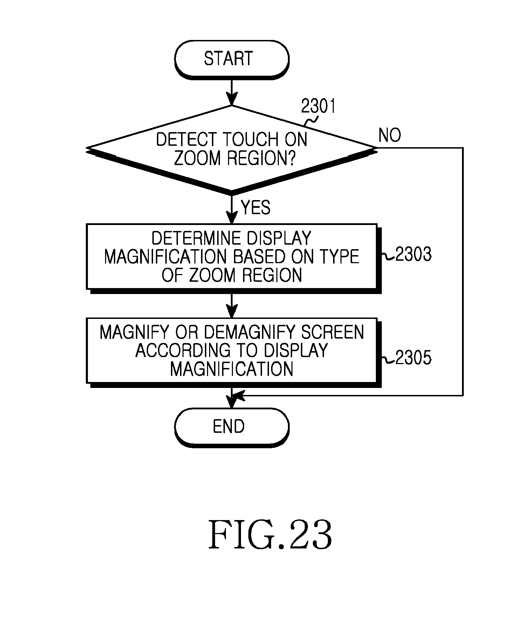

FIG. 23 illustrates a method for magnifying or reducing a display based on tap information of a zoom region in an electronic device according to an exemplary embodiment of the present invention.

Referring to FIG. 23, according to exemplary embodiments of the present invention, the electronic device may magnify or reduce the display by considering the number of taps in the zoom region.

The tap corresponds to a series of actions such that the touch is detected on the touch screen and then the touch release is detected continuously.

As illustrated in FIG. 23, the electronic device determines whether the touch (e.g., a tap) is detected in the zoom region in step 2301. For example, the size and the location of the zoom regions 2410, 2420, 2510 and 2520 may change according to the display type of the touch screen as shown in FIGS. 24A and 24B and FIGS. 25A and 25B.

When detecting the tap on the zoom region, the electronic device determines the display magnification according to the type of the zoom region of the detected tap in step 2303. In so doing, the electronic device determines to magnify or reduce the content displayed in the touch screen according to the type of the zoom region of the detected tap, and determines the magnification according to a pre-set display magnification. For example, when detecting the tap on the left zoom region as shown in FIG. 24A, the electronic device recognizes the display magnification. For example, when detecting the tap on the right zoom region as shown in FIG. 24A, the electronic device recognizes the display reduction.

In step 2305, the electronic device magnifies or reduces and displays the content displayed in the touch screen according to the display magnification determined based on the zoom region of the detected tap. In so doing, the electronic device can magnify or reduce the corresponding content based on the centre of the content displayed in the touch screen.

Next, the electronic device finishes this process.

According to exemplary embodiments of the present invention, when detecting the tap on the zoom region, the electronic device magnifies or reduces the display according to the pre-set display magnification. For example, when detecting the tap on the zoom-in region, the electronic device magnifies the display according to the pre-set magnification (e.g., 1.5x). Next, when detecting the tap again on the zoom-in region, the electronic device magnifies the enlarged display once again according to the pre-set magnification (e.g., 1.5x).

According to exemplary embodiments of the present invention, when detecting the tap on the zoom region, the electronic device may magnify or reduce the display according to the magnification determined based on the number of the taps on the zoom region. For example, when detecting the single tap on the zoom-in region, the electronic device magnifies the display according to the pre-set magnification (e.g., 1.5x) by considering the number of the taps. When detecting two successive taps on the zoom-in region, the electronic device magnifies the display according to the magnification (e.g., 2.5x) determined based on the number of the taps. The number of the taps on the zoom region and the display magnification can establish a first equation or a higher-degree equation.

According to exemplary embodiments of the present invention, the electronic device magnifies or reduces the corresponding content based on the centre of the content displayed in the touch screen according to the touch information of the zoom region.

According to exemplary embodiments of the present invention, the electronic device may magnify or reduce the content based on a magnification change reference point determined by a zoom function setting event. For example, when the zoom function setting event occurs, the electronic device can change the touch point detected through the touch screen, to a display magnification change point.

According to exemplary embodiments of the present invention, the electronic device may determine the magnification change reference point by considering the detected touch point in the zoom region for the sake of the display zoom-in or zoom-out. For example, when detecting the touch event in a portrait zoom region as shown in FIGS. 24A and 24B, the electronic device determines the centre on the horizontal line passing the initial touch point detected in the zoom region, as the magnification change reference point. Accordingly, the electronic device can magnify or reduce the display based on the magnification change reference point determined based on the touch point of the zoom region. For example, when detecting the touch event in a landscape zoom region as shown in FIGS. 25A and 25B, the electronic device determines the centre on the vertical line passing the initial touch point detected in the zoom region, as the magnification change reference point. Accordingly, the electronic device can magnify or reduce the display based on the magnification change reference point determined based on the touch point of the zoom region.

Alternatively, the electronic device may determine the magnification change reference point by considering the touch event detected outside the zoom region. For example, when a first touch event is detected at a certain point outside the zoom region and then a touch event is detected in the zoom region within a reference time, the electronic device determines the touch point detected outside the zoom region, as the magnification change reference point. Accordingly, the electronic device can magnify or reduce the display based on the magnification change reference point determined based on the touch point of the zoom region. The first touch event includes the touch, the tap, a tap-and-hold, and multiple successive tap information such as double tap.

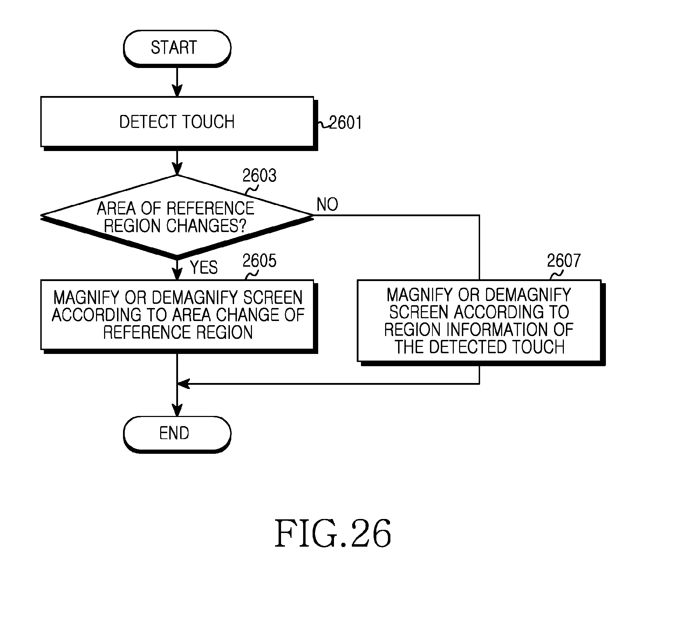

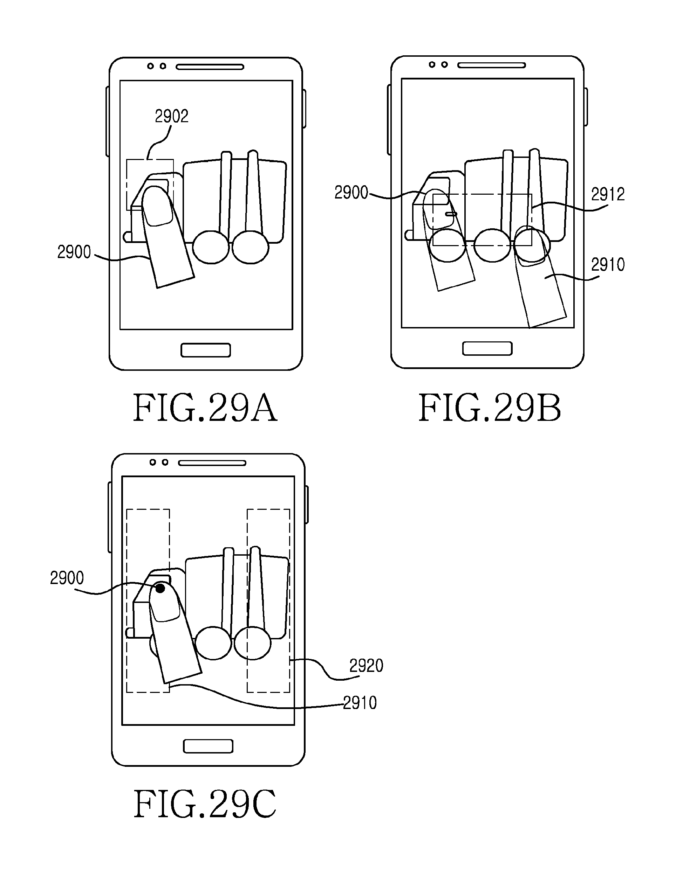

FIG. 26 illustrates a method for selectively magnifying/reducing a display based on an area change of a reference region according to an exemplary embodiment of the present invention. FIGS. 29A to 29C illustrate a display for determining an area change of a reference region according to an exemplary embodiment of the present invention.

Referring to FIGS. 26, and 29A to 29C, the electronic device detects the touch in step 2601. For example, the electronic device detects a first touch 2900 on the touch screen 1980 as shown in FIG. 29A.

In step 2603, the electronic device determines whether the area of the reference region changes. For example, when detecting the first touch 2900 as shown in FIG. 29A, the electronic device generates a reference region 2902 based on the first touch point. In contrast, when detecting multiple touches 2900 and 2910 as shown in FIG. 29B, the electronic device generates a reference region 2912 based on the multiple touch points. Accordingly, when at least one second touch 2910 is detected while the first touch 2900 detected in step 2601 is still pressed, the electronic device recognizes that the area of the reference region is changed.

When the electronic device determines that the area of the reference region changes in step 2603, the electronic device proceeds to step 2605 in which the electronic device magnifies or reduces the content displayed in the touch screen by considering the area change of the reference region additionally detected. For example, when the area of the reference region changes in step 2603, the electronic device recognizes the magnification/reduction event. Next, when detecting the area change of the reference region according to the movement of the touch points, the electronic device magnifies or reduces the content displayed in the touch screen in proportion to the area change of the reference region. For example, when additionally detecting a third touch after the magnification/reduction event, the electronic device may generate the reference region by considering the first touch point, the second touch point, and the third touch point. Hence, the electronic device magnifies or reduces the content displayed in the touch screen in proportion to the area change of the reference region based on the third touch point. The area change of the reference region includes at least one of the area change, the pixel number change, and the area change rate of the reference region.

In contrast, when the electronic device determines that the size of the reference region does not change in step 2603, the electronic device proceeds to step 2607 in which the electronic device magnifies or reduces the content displayed in the touch screen based on the touch point detected in step 2601. For example, when the first touch point 2900 resides in the zoom region 2910 as shown in FIG. 29C, the electronic device magnifies or reduces the content displayed in the touch screen based on the drag information according to the touch detected in the zoom region. In so doing, the electronic device determines to zoom in or out (to magnify or reduce) the content according to the drag direction of the zoom region 2910, and magnifies or reduces the display in proportion to the drag length change. Herein, the drag length includes at least one of the total length of the detected drag, the change value of the vertical coordinates of the drag, and the straight line distance from the drag start point to the drag end point. For example, when the first touch point 2900 resides in the zoom region 2910 as shown in FIG. 29C, the electronic device may magnify or reduce the content displayed in the touch screen by considering the type of the zoom region of the detected touch. In so doing, the electronic device determines to magnify or reduce the content according to the type of the touch detected region, and determines the magnification according to the pre-set display magnification.

Next, the electronic device finishes this process.

According to exemplary embodiments of the present invention, when the third touch is additionally detected after the magnification/reduction event, the electronic device recognizes that the area of the reference region changes according to the third touch point. Thus, the electronic device magnifies or reduces the content displayed in the touch screen according to the area change of the reference region.

According to exemplary embodiments of the present invention, when the third touch is additionally detected after the magnification/reduction event, the electronic device may recognize that the magnification/reduction event is initialized. For example, the electronic device can recognize the third touch as the touch for setting the reference region. Next, when detecting the area change of the reference region according to the movement of at least one of the first touch point, the second touch point, and the third touch point, the electronic device magnifies or reduces the content displayed in the touch screen in proportion to the area change of the reference region.

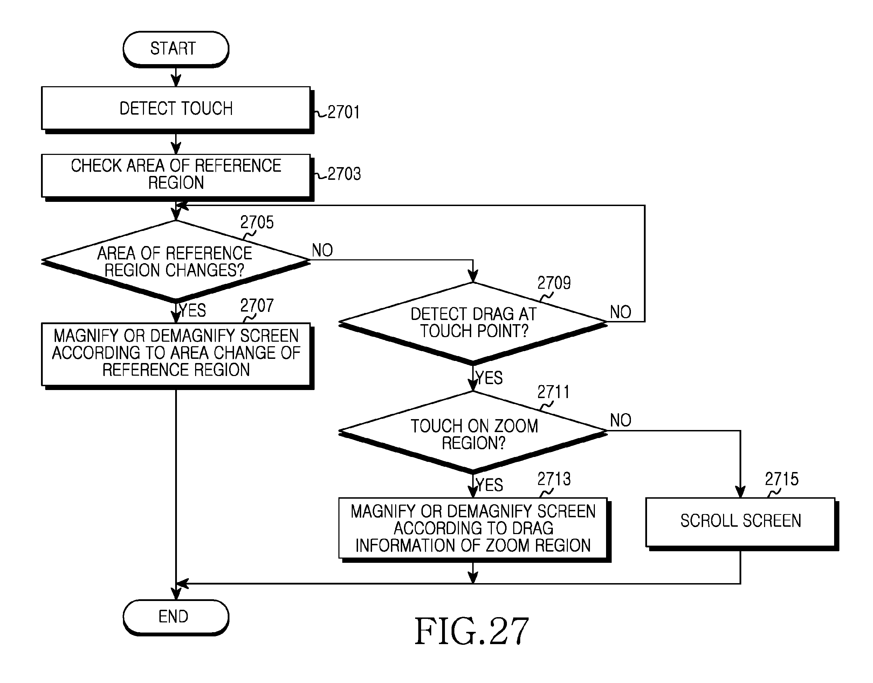

FIG. 27 illustrates a method for selectively magnifying/reducing a display based on an area change of a reference region according to an exemplary embodiment of the present invention.

Referring to FIG. 27, the electronic device detects the touch in step 2701. For example, the electronic device detects the first touch 2900 on the touch screen 1980 as shown in FIG. 29A.

In step 2703, the electronic device determines the area of the reference region based on the first touch point. For example, when detecting the first touch 2900 as shown in FIG. 29A, the electronic device determines the reference region 2902 having the area of a certain size by considering the first touch point. For example, the electronic device may determine the first touch point as the reference region. In this case, the size of the reference region based on the first touch is zero.

In step 2705, the electronic device determines whether the area of the reference region changes. For example, when detecting the single touch 2900, the electronic device determines the reference region 2902 based on the first touch point 2900 as shown in FIG. 29A. In contrast, when detecting the multiple touches, the electronic device determines the reference region 2912 based on the multiple touch points 2900 and 2910 as shown in FIG. 29B. Accordingly, when at least one second touch 2910 is detected while the first touch 2900 detected in step 2701 is still pressed, the electronic device recognizes that the area of the reference region is changed.

When the electronic device determines that the area of the reference region changes in step 2705, the electronic device proceeds to step 2707 in which the electronic device magnifies or reduces the content displayed in the touch screen by considering the area change of the reference region additionally detected. For example, when the area of the reference region changes in step 2705, the electronic device recognizes the magnification/reduction event. Next, when detecting the area change of the reference region according to the movement of the touch points, the electronic device magnifies or reduces the content displayed in the touch screen in proportion to the area change of the reference region. For example, when additionally detecting the third touch after the magnification/reduction event, the electronic device may determine the reference region by considering the first touch point, the second touch point, and the third touch point. Hence, the electronic device magnifies or reduces the content displayed in the touch screen in proportion to the area change of the reference region based on the third touch point. The area change of the reference region includes at least one of the area change, the pixel number change, and the area change rate of the reference region.

In contrast, when the electronic device determines that the area of the reference region does not change in step 2705, the electronic device proceeds to step 2709 in which the electronic device determines whether the first touch point changes. For example, the electronic device determines whether the drag on the first touch point is detected. When detecting the change of the first touch point over the reference distance, the electronic device can recognize the drag on the first touch point.

When the electronic device determines that the first touch point does not change in step 2709, the electronic device proceeds to step 2705 in which the electronic device determines whether the area of the reference region changes. For example, when the first touch point does not change during the reference time and the area of the reference region does not change, the electronic device recognizes the first touch as a touch command. Accordingly, the electronic device executes the touch command based on the first touch.

In contrast, when the electronic device determines that the first touch point changes in step 2709, the electronic device proceeds to step 2711 in which the electronic device determines whether the first touch point resides in the zoom region. For example, the electronic device determines whether the first touch point detected in step 2701 resides in the zoom region. For example, the electronic device determines whether the first touch point enters the zoom region according to the change of the first touch point.

When electronic device determines that the first touch point does not reside in the zoom region in step 2711, the electronic device proceeds to step 2715 in which the electronic device scrolls through the display according to the change of the first touch point.

In contrast, when electronic device determines that the first touch point resides in the zoom region in step 2711, the electronic device proceeds to step 2713 in which the electronic device magnifies or reduces the content displayed in the touch screen by considering the drag information according to the touch detected in the zoom region in step 2713. In so doing, the electronic device determines to zoom in or out (to magnify or reduce) the content according to the drag direction of the zoom region, and determines the magnification according to the drag length. For example, when detecting the upward drag in the zoom region as shown in FIG. 30A, the electronic device determines to magnify the content. Hence, the electronic device magnifies the display in proportion to the drag length change 3000 in the zoom region as shown in FIG. 30B. For example, when detecting the downward drag in the zoom region as shown in FIG. 31A, the electronic device determines to reduce the content. Hence, the electronic device reduces the display in proportion to the drag length change 3100 in the zoom region as shown in FIG. 31B. The drag length includes at least one of the total length of the detected drag, the change value of vertical coordinates of the drag, and the straight line distance from the drag start point to the drag end point. The drag corresponds to an action which moves the first touch point over the reference distance.

Next, the electronic device finishes this process.

According to exemplary embodiments of the present invention, when detecting the change of the first touch point in step 2709, the electronic device determines whether the first touch point resides in the zoom region in step 2711.

Alternatively, according to exemplary embodiments of the present invention, when detecting no size change of the reference region during the reference time, the electronic device may determine whether the first touch point resides in the zoom region in step 2711. In step 2713, the electronic device magnifies or reduces the content displayed in the touch screen by considering the drag information of the first touch point in the zoom region in step 2713. When the first touch point does not change as long as the reference distance in the zoom region, the electronic device recognizes the first touch as the touch command. For example, when the reference distance is 3mm and the change of the first touch point is smaller than 3mm, the electronic device recognizes that the first touch point does not change. Hence, the electronic device executes the touch command for the first touch. By contrast, when the change of the first touch point is greater than 3mm, the electronic device recognizes the change of the first touch point. Thus, the electronic device determines whether the first touch point resides in the zoom region.

When additionally detecting the third touch after the magnification/reduction event, the electronic device recognizes that the area of the reference region changes according to the third touch point. Hence, the electronic device magnifies or reduces the content displayed in the touch screen according to the area change of the reference region.

Alternatively, according to exemplary embodiments of the present invention, when additionally detecting the third touch after the magnification/reduction event, the electronic device may recognize that the magnification/reduction event is initialized. For example, the electronic device can recognize the third touch as the touch for setting the reference region. Next, when detecting the area change of the reference region according to the movement of at least one of the first touch point, the second touch point, and the third touch point, the electronic device magnifies or reduces the content displayed in the touch screen in proportion to the area change of the reference region.

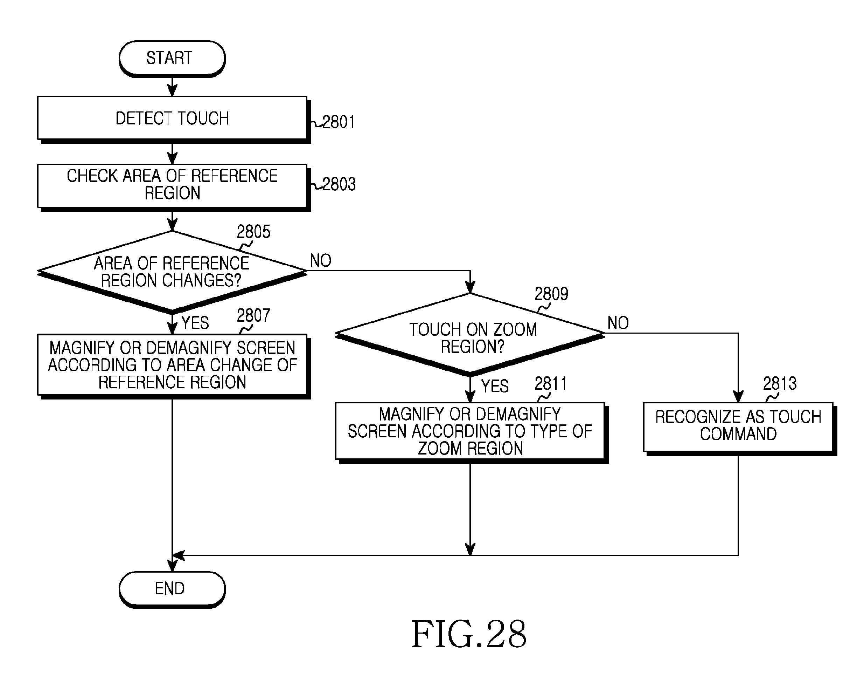

FIG. 28 illustrates a method for selectively magnifying/reducing a display based on an area change of a reference region according to an exemplary embodiment of the present invention.

Referring to FIG. 28, the electronic device detects the touch in step 2801. For example, the electronic device detects the first touch 2900 on the touch screen 1980 as shown in FIG. 29A.

In step 2803, the electronic device determines the area of the reference region based on the first touch point. For example, when detecting the first touch 2900 as shown in FIG. 29A, the electronic device determines the reference region 2902 having the area of a certain size by considering the first touch point. For example, the electronic device may determine the first touch point as the reference region. In this case, the area of the reference region based on the first touch is zero.

In step 2805, the electronic device determines whether the area of the reference region changes. For example, when detecting the single touch, the electronic device determines the reference region 2902 based on the first touch point 2900 as shown in FIG. 29A. In contrast, when detecting the multiple touches, the electronic device determines the reference region 2912 based on the multiple touch points 2900 and 2910 as shown in FIG. 29B. Accordingly, when at least one second touch 2910 is detected while the first touch 2900 detected in step 2801 is still pressed, the electronic device recognizes that the area of the reference region is changed.

When the electronic device determines that the area of the reference region changes in step 2805, the electronic device proceeds to step 2807 in which the electronic device magnifies or reduces the display by considering the area change of the reference region additionally detected. For example, when the area of the reference region changes in step 2805, the electronic device recognizes the magnification/reduction event. Next, when detecting the area change of the reference region according to the movement of the touch points, the electronic device magnifies or reduces the content displayed in the touch screen in proportional to the area change of the reference region. For example, when additionally detecting the third touch after the magnification/reduction event, the electronic device may determine the reference region by considering the first touch point, the second touch point, and the third touch point. Hence, the electronic device magnifies or reduces the content displayed in the touch screen in proportion to the area change of the reference region based on the third touch point. The area change of the reference region includes at least one of the area change, the pixel number change, and the area change rate of the reference region.

In contrast, when the electronic device determines that the area of the reference region does not change in step 2805, the electronic device proceeds to step 2809 in which the electronic device determines whether the first touch point resides in the zoom region. For example, the electronic device determines whether the first touch point detected in step 2801 resides in the zoom region.

When the electronic device determines that the first touch point does not reside in the zoom region in step 2809, the electronic device proceeds to step 2813 in which the electronic device recognizes the first touch as the touch for the touch command and executes the event corresponding to the touch command.

In contrast, when the electronic device determines that the first touch point resides in the zoom region in step 2809, the electronic device proceeds to step 2811 in which the electronic device magnifies or reduces the display according to the type of the zoom region of the detected touch. In so doing, the electronic device determines to zoom in or out the content according to the type of the zoom region, and determines the magnification according to the pre-set display magnification. Accordingly, when detecting the touch on the first zoom region 2910 as shown in FIG. 29C, the electronic device determines to magnify the content. In so doing, the electronic device magnifies the content displayed in the touch screen according to the pre-set display magnification. In contrast, when detecting the touch on the second zoom region 2920 as shown in FIG. 29C, the electronic device determines to reduce the content. In so doing, the electronic device reduces the content displayed in the touch screen according to the pre-set display magnification.

Next, the electronic device finishes this process.

According to exemplary embodiments of the present invention, when additionally detecting the third touch after the magnification/reduction event, the electronic device recognizes that the area of the reference region changes according to the third touch point. Hence, the electronic device magnifies or reduces the content displayed in the touch screen according to the area change of the reference region.

Alternatively, according to exemplary embodiments of the present invention, when additionally detecting the third touch after the magnification/reduction event, the electronic device may recognize that the magnification/reduction event is initialized. For example, the electronic device can recognize the third touch as the touch for setting the reference region. Next, when detecting the area change of the reference region according to the movement of at least one of the first touch point, the second touch point, and the third touch point, the electronic device magnifies or reduces the content displayed in the touch screen in proportion to the area change of the reference region.

As set forth above, the electronic device including the touch screen magnifies or reduces the display according to the area change or the area change rate of the reference region, or the pixel number change in the reference region. Therefore, the user can easily perceive the display magnification/reduction type.

In addition, the electronic device magnifies or reduces the display according to the touch information on the zoom region designated in part of the display. Therefore, the user can easily perceive the display magnification/reduction type.

The above-described methods according to the exemplary embodiments as described in the claims and/or the specification of the present disclosure can be implemented in hardware or software alone or in combination.

For software, a non-transitory computer-readable storage medium comprising one or more programs (software modules) can be provided. One or more programs stored to the computer-readable storage medium are configured for execution of one or more processors of the electronic device. One or more programs include instructions for making the electronic device execute the methods according to the exemplary embodiments of the present invention as described in the claims and/or the specification of the present disclosure.

Such programs (software module, software) can be stored to a random access memory, a non-volatile memory including a flash memory, a Read Only Memory (ROM), an Electrically Erasable Programmable ROM (EEPROM), a magnetic disc storage device, a Compact Disc ROM (CD-ROM), Digital Versatile Discs (DVDs) or other optical storage devices, a magnetic cassette, and the like. Alternatively, the programs can be stored to a memory combining part or all of those recording media. A plurality of memories may be equipped.

The programs can be stored to an attachable storage device of the electronic device accessible via the communication network such as Internet, Intranet, Local Area Network (LAN), Wide LAN (WLAN), Storage Area Network (SAN), and the like, or a communication network by combining the networks. The storage device can access the electronic device through the external port.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

A separate storage device in the communication network may access a portable electronic device.

While the invention has been shown and described with reference to certain exemplary embodiments thereof, it will be understood by those skilled in the art that various changes in form and details may be made therein without departing from the scope of the invention as defined by the appended claims.

## Claims

1. A method for controlling image display in an electronic device, the method comprising:
detecting at least one first touch point;
determining a first region according to the at least one first touch point;
determining whether an area of the first region changes;
when the area of the first region is maintained, determining whether the first touch point resides in a display control region; and
when the first touch point resides in the display control region, magnifying or reducing a displayed image by according to a location change of the first touch point.

2. The method of claim 1, wherein the first region comprises one of a polygonal shape, a circular shape, and an oval shape.

3. The method of claim 1 or claim 2, wherein determining whether an area of the first region changes comprises:
if at least one second touch point is detected while the first touch point is maintained, determining a second region according to the at least one first touch point and the at least one second touch point; and
determining whether the area of the first region changes by comparing the area of the first region and the area of the second region.

4. The method of claim 1 or claim 2, wherein determining whether an area of the first region changes comprises:
if movement of at least one first touch point is detected, determining a second region according to the movement of the moved first touch point; and
determining whether the area of the first region changes by comparing the area of the first region and the area of the second region.

5. The method of claim 1 or claim 2, wherein determining whether an area of the first region changes comprises:
determining whether a number of pixels in the first region changes.

6. The method of any one of the preceding claims, further comprising:
when the area of the first region is determined to have changed, magnifying or reducing a displayed image according to an area change of the first region.

7. The method of any one of claims 1 to 5, further comprising:
when the area of the first region is determined to have changed, magnifying or reducing a displayed image according to an area change rate of the first region.

8. The method of any one of the preceding claims, wherein when the area of the first region is maintained, magnifying or reducing a displayed image comprises:
determining a zoom mode according to a drag direction of the at least one first touch point in the display control region; and
magnifying or reducing the displayed image in proportion to a drag length according to the zoom mode;
wherein the zoom mode comprises one of a zoom-in operation and a zoom-out operation.

9. The method of claim 8, wherein the drag length comprises at least one of a total length of a detected drag, a change value of vertical coordinates of the drag, and a straight line distance from a drag start point to a drag end point.

10. The method of claim 8 or claim 9, further comprising:
when detecting an inflection point of a drag of the at least one first touch point in the display control region, changing the zoom mode; and
magnifying or reducing the display in proportion to a drag length from the inflection point according to the zoom mode.

11. The method of any one of claims 1 to 7, wherein when the area of the first region is maintained, magnifying or reducing a displayed image comprises:
determining a zoom mode according to a type of the display control region where the detected first touch point resides; and
magnifying or reducing the displayed image according to the zoom mode;
wherein the zoom mode comprises one of a zoom-in operation and a zoom-out operation.

12. The method of any one of claims 1 to 7, wherein when the area of the first region is maintained, magnifying or reducing a displayed image comprises:
magnifying or reducing the displayed image by considering touch information in the first region based on a centre of content displayed in the display control region.

13. An electronic device comprising:
a touch screen arranged to detect a touch; and
a controller arranged to control the touch screen;
wherein the controller is further arranged to implement the method any one of claims 1 to 12.
